(19) Europäisches Patentamt / European Patent Office / Office européen des brevets

(11) **EP 2 994 826 B1**

(12) **EUROPEAN PATENT SPECIFICATION**

(45) Date of publication and mention
of the grant of the patent:
**07.08.2019 Bulletin 2019/32**

(21) Application number: **14795142.0**

(22) Date of filing: **06.05.2014**

(51) Int Cl.:
*G06F 7/58* (2006.01)     *G06F 16/332* (2019.01)
*G06N 5/02* (2006.01)     *G06N 5/04* (2006.01)
*G06N 7/00* (2006.01)     *G10L 15/22* (2006.01)

(86) International application number:
**PCT/US2014/036927**

(87) International publication number:
**WO 2014/182672 (13.11.2014 Gazette 2014/46)**

(54) **ACQUISITION AND ASSESSMENT OF CLASSICALLY NON-INFERABLE INFORMATION**

ERFASSUNG UND BEWERTUNG VON TYPISCHERWEISE NICHT ABLEITBAREN INFORMATIONEN

ACQUISITION ET ÉVALUATION D'INFORMATIONS NON DÉDUCTIBLES SELON UN PROCÉDÉ CLASSIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.05.2013 US 201361820457 P**
**28.06.2013 US 201361840900 P**

(43) Date of publication of application:
**16.03.2016 Bulletin 2016/11**

(73) Proprietor: **Psigenics Corporation**
**Gainsville, FL 32627 (US)**

(72) Inventor: **WILBER, Scott A.**
**Gainesville, Florida 32627 (US)**

(74) Representative: **McQueen, Andrew Peter et al**
**Miltons IP - Europe**
**5th Floor, Broad Quay House**
**Prince Street**
**Bristol BS1 4DJ (GB)**

(56) References cited:
**EP-B1- 2 156 282         WO-A1-2009/083840**
**US-A1- 2003 105 959     US-A1- 2006 291 649**
**US-A1- 2009 276 839     US-A1- 2009 292 687**
**US-A1- 2010 057 653     US-B1- 6 674 908**
**US-B2- 8 423 297**

**Description**

TECHNICAL FIELD

The current invention relates to devices and methods for answering questions involving non-inferable information by measuring an influence of mind using high speed random number generators.

BACKGROUND ART

Question answering is a field in computer science related to information retrieval and natural language processing (NLP) which is concerned with building systems that automatically answer questions posed by humans in a natural language. While its basics have been known for many years, the widespread availability of enormous amounts of information and data on the World Wide Web (WWW) have recently made it a topic of great interest. A question answering (QA) system is usually a computer program that can construct answers by querying a structured database of knowledge or information or unstructured collections of natural language documents. Some examples of natural language document collections used for QA systems include: a local collection of reference texts, documents and web pages; compiled newswire reports and a subset of documents and WWW pages available on the Internet.

QA research attempts to provide answers for a wide range of question types, for example: fact, list, definition, *How, Why* and hypothetical questions. There are two general types of QA systems, closed-domain and open-domain. Closed-domain QA deals with questions under a specific domain such as medicine or sports, while open-domain QA deals with questions about nearly anything.

International Publication Number WO 2009/083840, published 9 July 2009, describes a pre-examination patient information gathering system. In one aspect, WO 2009/083840 discloses a question-answering system configured to present questions to a patient and to receive responses from the patient. The question-answering system comprises a user interface, an electronic processor including a responses analyzer, and a query input/output module interfacing between the electronic processor and the user interface. Responses received from a patient are input to the responses analyzer for analysis. A patient actively interacts with the question-answering system using at least one user input device. The system optionally includes databases of initial and follow-up questions. The responses analyzer may select follow-up questions based on responses received from the user. In a second aspect, WO 2009/083840 discloses optional physiological sensors and a physiological sensors reader. Thus, the pre-examination patient information gathering system collects patient information in the form of received responses to presented questions, and optionally also in the form of physiological parameters sensed autonomously and optionally unobtrusively by physiological sensors.

United States Patent No. 7,209,876, issued Apr. 24, 2008, to Miller and Wantz, teaches a system and method enabling users to retrieve relevant results to a natural language question or query, even in those cases in which the user lacks specialized knowledge concerning how to formulate a proper query. The system and method disclosed therein in varying embodiments include using a heuristic for accepting natural language questions or queries, transforming the natural language question or query into a generalized natural language answer form (i.e., the natural language structure that an answer to the user's query is expected to take), using an answer form as a pattern-matching template against which the data collection may be searched, and providing natural language answers having a form matching the natural language answer form. United States Patent No. 7,444,279, issued Oct. 28, 2008, to Murata, teaches a question answering system that analyzes a language expression of input question statement data and estimates the answer type which is a type of language expression which can be an answer to the question statement data. Then, it extracts keywords from the question statement data and retrieves and extracts document data including the keywords from the document data group. Furthermore, it extracts a language expression which can be the answer from the document data as an answer candidate and assigns an evaluation point to the answer candidate.

United States Patent Application Publication No. 2014/0072948, by Boguraev et al., published March 13, 2014, teaches a method of generating secondary questions in a question-answer system. Missing information is identified from a corpus of data using a computerized device. The missing information comprises any information that improves confidence scores for candidate answers to a question. The computerized device automatically generates a plurality of hypotheses concerning the missing information. The computerized device automatically generates at least one secondary question based on each of the plurality of hypotheses. The hypotheses are ranked based on relative utility to determine an order in which the computerized device outputs the at least one secondary question to external sources to obtain responses.

In more advanced QA systems, desired answers may lie outside the scope of the written texts, WWW page content, structured databases and other data sources. This requires more sophisticated automated reasoning components and specialized knowledge-based or expert systems. Complex questions may not be well captured by a QA system or, in a sense, "understood," by the system. In such cases the questioner may have to reformulate the question or interact with the system to clarify the sense of certain words or the type of information being requested. Various types of statistical analyses are used to improve the accuracy of the natural language processing (NLP) of the question, and improve the selection of possible answers

Watson is a question answering (QA) system developed by IBM Corporation to apply advanced natural language processing, information retrieval, knowledge representation, automated reasoning, and machine learning technologies to the field of open-domain question answering. An open-domain question answering system tries to return an answer in response to the user's question in the form of short texts rather than a list of relevant documents. The computer system was specifically developed to answer questions on the quiz show *Jeopardy!* In 2011, Watson competed on *Jeopardy!* against two former winners and won first prize in the competition.

Watson may currently be the most advanced QA system ever demonstrated in public, but it is still limited to obtaining answers that can be inferred through complex rules of logic from the substantial database of information available to it. In addition to this fundamental limitation, Watson is a supercomputer by today's standards operating at about 80 TeraFLOPs (trillion floating-point operations per second) and costing millions of dollars to build.

These examples of QA systems have a limitation common to all prior art systems: they can only provide answers to questions when the required information is either explicitly contained in available data sources or is inferable or computable from available data sources. In this context, the term "inference" takes on its usual dictionary meaning of an idea or conclusion that is drawn from evidence and reasoning.

Thus, a significant limitation of prior art question answering systems is their inability to infer or calculate answers when the required facts or information is not available or is not in a form that can be recognized by the system, even with user interactive clarification of the question and desired answer type. In addition they are generally extremely complex and require large and expensive computer systems to run.

In today's electronic information age, we store or transfer almost every important or economically valuable document or bit of data in some type of encrypted form to prevent others from compromising privacy or stealing the information for nefarious uses. Random numbers are used in virtually every form of encryption or data security, and the source of these random numbers is a random number generator.

Initially, virtually all random numbers for electronic use were produced by pseudorandom number generators (PRNGs). These generators are computer algorithms that are initialized with a seed or starting point and then produce an output sequence precisely determined by the computation of the steps in the algorithm. Every PRNG has a period, or length of bits, after which the sequence begins to repeat. PRNGs have been improved over the years to so-called cryptographic or cryptographically-secure PRNGs (CSPRNGs), which are more secure because predicting future output given a sequence of previous bits is computationally intractable for current computer technology. Nevertheless, advances in supercomputers and especially the development of quantum computers continue to chip away at the ultimate security of various encryption methods.

Non-deterministic random number generators (NDRNGs), also known as true random number generators (TRNGs), which derive their randomness from a physical entropy source, have been developed partly to enhance the security of PRNGs by providing seeds that are inherently non-deterministic. In addition, some algorithms use a NDRNG output directly to encrypt information. Some applications require a non-deterministic random number generator that is theoretically unpredictable or has properties that only exist due to being derived from quantum mechanical measurements. Ideally, a NDRNG output should be completely unpredictable and exhibit virtually perfect statistical properties.

There are two general types of non-deterministic (or true) entropy sources that may be measured to generate non-deterministic (or true) random numbers. The first type includes a physical process that is difficult or impossible to measure or too computationally intense to predict, or both. This is a chaotic entropy source. A common example known to most people is a lottery drawing machine. A set of sequentially numbered balls is placed in a chamber and they are constantly mixed by spinning the chamber or by blowing air through the chamber. Several of the balls are allowed to drop out of the chamber and the numbers marked on the balls represents the lottery drawing. The drawing is random because of the large number of interactions between the balls and the chamber resulting in a rapidly increasing number of possible movements of each ball. Not only is the complexity of these interactions exceedingly high, there is no apparent way of observing or precisely measuring all the internal variables of the balls, chamber and air flow.

A second and very different type of entropy source is quantum mechanical. Many microscopic particles or waves, such as photons, electrons and protons have quantum mechanical properties including spin, polarization, position and momentum. Given the proper setup for producing these particles, the specific values of their spin or polarization, for example, are not only unknown and theoretically unpredictable, they are physically undetermined until a measurement is performed. In these simple systems a measurement collapses the quantum wave function, producing one of two possible outcomes. According to the highly successful theory of quantum mechanics, the specific outcome is not knowable or predictable prior to the measurement. Only the probability of a specific outcome is computable. Therefore, the measurement of quantum entropy can produce the highest degree of non-determinism possible. Some cryptographers believe a non-deterministic random number generator based on measurements of quantum mechanical properties can be used to produce the most secure encryption possible.

In contrast to entropy (or "true entropy"), another important concept may be called pseudo-entropy. Pseudo-entropy is the entropy mathematically measured or inferred in pseudorandom sequences resulting solely from statistical randomness of the sequences. By definition, pseudo-entropy is not real entropy because it has no physical source. This definition disregards any actual entropy contained in a non-deterministic random seed that may have been used to initialize a pseudorandom number generator (PRNG). A PRNGs output bits have no more total entropy than the number of bits of entropy in the seed that was used to initialize the PRNG.

The concept of pseudo-entropy is important in the context of randomness correction, also called whitening, cryptographic whitening or conditioning and post processing. In order to satisfy the statistical requirements for modern NDRNGs, their output sequences are typically subjected to some type of randomness correction to reduce statistical defects below a predetermined or desired level. A typical method of randomness correction is to perform an Exclusive-Or function (XOR) of the bits or words in the non-deterministic random sequence with bits or words generated by a PRNG. A property of XORing random numbers from independent sources is that the resulting numbers have statistical properties better than or at least equal to the properties of the better, or most statistically random sequence of numbers used to make the combination.

Conventional NDRNGs of the prior art generally generate sequences with some statistical defects, typically manifesting as a bias in the number of ones and zeros or in a sequence's autocorrelation, or both. These statistical defects are typically caused by non-ideal design, or in the limit, in imperfections in the measurement device and processing circuitry. No matter how carefully a device or circuit is constructed, some drift occurs caused by temperature change or simply by ageing.

Since it is possible to design a PRNG with very good statistical properties, XORing these pseudorandom numbers with statistically defective true random numbers produces numbers with the same very good - or even slightly better - statistical properties. These resulting numbers are still considered non-deterministic or truly random, but the XORing process does not add any true entropy, that is, chaotic or quantum entropy, to the output numbers. Rather, the true entropy is supplemented with the pseudo-entropy in the pseudorandom numbers, and the two become statistically inseparable.

Cryptographic whitening is usually accomplished by passing statistically defective (i.e., imperfect) non-deterministic random numbers through a cryptographic hash function, such as SHA-1. This has at best an effect on the entropy similar to the effect of XOR processing in that the input random numbers are transformed by an algorithm so their statistical properties are greatly improved, but the total amount of true entropy per bit cannot be increased unless more numbers are fed in than taken out of the hash function. In the worst case, the hash function does not entirely preserve the entropy provided at its input and the output numbers contain less true entropy and additional pseudo-entropy.

Conditioning a NDRNG sequence does not always make it entirely unpredictable. If a NDRNG output is predictable to a certain degree due to a statistical defect prior to randomness correction or conditioning, the resultant numbers after conditioning may still be theoretically predictable to that same degree. To make such a prediction requires knowledge of the algorithm used to perform the conditioning and sufficient computing power to reverse the process. This potential security loophole is most pronounced when the raw non-deterministic random sequence has significant statistical defects or relatively low entropy, and an insufficient number of these low-entropy bits is used to produce each conditioned bit. This would be particularly problematic where the conditioning is a bit-by-bit XORing of deficient NDRNG bits with PRNG bits.

Sometimes randomness correction methods are also used to extend or increase the number of output random numbers relative to the number of non-deterministic random input numbers. This is normally accomplished by a deterministic algorithm such as a PRNG that is periodically reseeded by the true entropy source. Provided the algorithm is appropriately designed, the amount of true entropy per output bit is equal to the number of bits of true entropy input to the algorithm divided by the number of output bits that are actually used or observed. This is another way of saying the total entropy out is less than or equal to the total entropy in.

Statistical tests performed on random sequences cannot distinguish the various types of entropy used to produce the sequences, nor can the proportion of the different types be determined given a mixture of two or more types.

Experiments intended to demonstrate the possibility that mental intention can affect the measured outcome of a truly random process have been around for about 50 years. While the statistical evidence for the validity of this effect is widespread and persuasive, the magnitude of the effect or its effect size had been too small to be usable or even psychologically interesting to many participating subjects. After years of research to overcome these limitations, a method was discovered for efficiently converting a very small effect manifesting as a bias in a large number of bits into a much larger effect in a greatly reduced number of bits - a method called bias amplification.

Devices and methods responsive to an influence of mind have not been fully theoretically modeled or tested for very large numbers of bits used to calculate each measurement of an influence of mind. Non-deterministic random number generators often include processing with some type of randomness correction due to excessive bias or other statistical defect, which reduces the responsivity of the measurement. Mathematical models allowing optimization of design have not been available.

Prior art non-deterministic random number generators, which are a component of devices responsive to influences of mind, are not adequately modeled to calculate the type and amount of various types of entropy, such as chaotic and quantum entropy, especially in programmable logic arrays (PLAs), field-programmable gate arrays (FPGAs) and integrated circuits. Generally, raw random numbers of the prior art have too much bias and autocorrelation to be used directly without some type of randomness correction algorithm that may interfere with the measurement of an influence of mind. Maximum generation rates are limited by excessive power consumption and heat dissipation as well as device resource allocation. Devices and methods for random number generation that use quantum entropy sources to increase responsivity of measurements of an influence of mind that are small, inexpensive and fast have not been available. Inexpensive high speed non-deterministic random number generators with known and predictable entropy are needed.

DISCLOSURE OF INVENTION

This invention helps to solve some of the problems mentioned above. Systems and methods in accordance with the invention provide methods and systems for mind-enabled question answering (MEQA). This specification also discloses the design and implementation of practical non-deterministic random number generators (NDRNGs), including in standard integrated circuits, that provide output sequences with arbitrarily small statistical defects and quantum entropy at a specified target level. Such NDRGNs are particularly useful in MEQA systems.

Devices and methods for mind-enabled question answering (MEQA) systems answer questions that are not inferable from information available from private databases, online searching or other sources as described in the prior art. QA systems use information provided by using devices and methods that respond to an influence of mind, in this context generally referred to as mind-enabled or ME technology. ME technology responds by providing a measurement that is associated with, or appears to be entangled with, an event or fact by an influence of the mind of a user or operator. Information concerning events or facts provided in this way is not limited to what can be inferred by logical operations of computers or even human thinking. In its simplest form, a large number of non-deterministic random bits are generated while a user holds a mental intention or visualization that a measurement will reveal a single aspect or "bit" of the desired information. This mental focus causes a non-stationary or momentary shift in the measurement of the generated bits that is indicative of the desired information. Bias amplification algorithms concentrate or amplify tiny shifts in the many generated bits into a large probability shift in a small number of bits. Those bits are processed further into a single output bit that is then taken as representative of the desired information. The accuracy of a single measured output bit being correct may be substantially less than 100%, but many such bits are produced and their results combined to increase the accuracy of the final outcome. Mind-enabled question answering (MEQA) systems in accordance with the invention may also include traditional sources of information as in QA systems of the prior art, or they may operate purely from the information provided by using the mind-enabled technology.

In a preferred embodiment, the questions are first converted into a graphical representation showing variables and their relationships. An example of this is a Bayesian Network, BN. Prior information estimated from available sources or beliefs is assigned to the nodes in the network. Bayesian analysis is used to calculate the probability of the correctness of the answer, as well as the importance of the information at each node and its effect on the probability distribution of the answer. Additional information is added to the nodes having the greatest effect on the answer's probability of correctness. This is done by repeated interaction with a person (operator/user) by asking simplified questions related to the nodes. The operator uses ME technology to obtain bits of information related to the desired answer. This new information is used to calculate posterior probabilities (probabilities calculated after new information is added) until the answer to the original question reaches an acceptable degree of correctness as indicated by its probability.

Specific embodiments of NDRNGs are implemented in Field-Programmable Gate Arrays (FPGAs) that generate random bits at rates up to billions of bits per second with bias and autocorrelation less than 0.01 parts per million (ppm). Some embodiments achieve an arbitrarily high statistical quality without the need for any type of randomness correction. Removing the need for randomness correction allows the special properties of quantum measurements to be preserved.

Thus, the present specification teaches fundamental advances in mind-enabled technology. A number of mathematical models explain and quantify the magnitude and expected behavior of the mind-enabled devices and methods under various design conditions. The models show apparent limits to the responsivity or effect size as the random generation rate increases above one terabit-per-second (Tbps), or as the effect size gets close to 100 percent. Raw random bits without additional post processing or randomness correction are used to increase the input effect size (the apparent fractional shift of the bias from the nominal 50/50 probability before bias amplification). Random bit streams are processed to simultaneously measure several different statistical properties such as bias, first- and second-order autocorrelation and cross-correlation between multiple random bit streams. Results from these simultaneous measurements are combined to increase the effective random number generation rate. In some embodiments, a bias calibration step is added to the final output after bias amplification of the processed random streams to remove tiny residual biases. Non-deterministic random sources with relatively larger quantum entropy content produce increased effect sizes.

A core component of ME technology is an ultra-high-speed non-deterministic random number generator (NDRNG). Mathematical models disclosed in this specification estimate the amount and type of entropy from various sources, and how the entropy from these sources combines to produce the total entropy per output bit. In a preferred embodiment, models are applied to CMOS transistors as components of ring oscillators in integrated circuits, specifically in field-programmable gate arrays (FPGAs), to produce high-speed non-deterministic random number sequences. The models are used to calculate the size of statistical defects in the output sequences as a function of specific design parameters of the rings and their combinations. This information is used to maximize the random bit generation rate using minimum circuit resources (logic elements in FPGAs) while producing random sequences with statistical biases below a specified amount. A plurality of similar generators are placed into a single integrated circuit (IC) or very-large-scale integrated circuit (VLSI) to produce effective generation rates of over 1.6 Tbps.

The fraction of entropy due to quantum mechanical effects is increased by a number of approaches. Custom integrated circuits use transistors with very thin gate oxide insulation to greatly increase tunneling and thereby the relative component of quantum mechanical entropy in output bits. Further increases in quantum entropy are produced by using (quantum) tunneling transistors in place of the usual MOS transistors used in inverters in standard ICs. In tunneling transistors, virtually all the current flowing is due to quantum mechanical effects. Integrated circuits that produce and measure single qubits at very high rates are nearly ideal for producing random bits with virtually pure quantum mechanical entropy.

High-speed random number generators in accordance with the invention in conjunction with amplification algorithms greatly enhance the ability to obtain classically non-inferable information. These measurements are statistically significant and develop rapidly, thus being relevant and useful for practical applications. Mathematical models based on a random-walk bias amplifier and actual examples using GHz to THz non-deterministic random bit generators indicate that measurements of mentally-influenced outputs of these generators produce results approaching 100 percent of the corresponding intended outcomes, and at trial rates around one to two per second. Exemplary embodiments in accordance with the invention indicate feedback of results optimally occur within about a quarter of a second of the generation of each trial so a trend is noticeable in just a few seconds. Further, the effect size should preferably be above about 4 to 5 percent to be psychologically "impressive".

In order to utilize the power of bias amplification, faster non-deterministic random number generators (NDRNGs), were developed. The first such generators produced 16 Mbps. Then, an array of 64 of these generators produced an aggregate generation rate of 1 Gbps. Subsequently, the rate has been steadily increased to over one terabit per second (Tbps) in a single device.

In addition to bias amplification and extremely high-speed non-deterministic random number generators, a number of mathematical models are presented in this specification to explain and quantify both the magnitude and expected behavior of the response of a mind-enabled device under various design conditions. They also provide means of defining the apparent limits of measuring an influence of mind.

An embodiment of a mind-enabled device in accordance with the invention measures statistical deviations in non-deterministic random number generator output, wherein said deviations are correlated to specific mental intention and said generator output has no randomness correction and contains a predetermined amount of quantum entropy. In some embodiments, said generator output has at least 0.5 bits per bit of quantum entropy. In some embodiments, said generator has an aggregate generation rate of at least 100 billion bits per second (Gbps).

An object of some embodiments is to provide a NDRNG in an integrated circuit that produces random numbers without randomness correction. Some embodiments not including randomness correction comprise MOS transistors designed to increase tunneling leakage currents and shot noise to increase quantum entropy. In some embodiments of NDRNGs contained in integrated circuits, said random numbers contain quantum entropy of at least 0.90 bits per bit.

In some embodiments in accordance with the invention, a mind-enabled device measures statistical deviations in NDRNG output. The statistical deviations are correlated with an influence of mind. By measuring the statistical deviations, classically non-inferable information is obtained. The output of at least one NDRNG is passed through a bias amplifier. Preferably (but not necessarily), the output from said at least one NDRNG is converted to one or more outputs each of which contains a bias representative of a statistical property of said NDRNG output(s). Typically, one to three output streams from the NDRNG are processed in a converter, in addition to the stream that is sent to a bias amplifier without prior conversion. In some embodiments, a plurality of streams is combined to provide a single output. Some embodiments comprise one or more bias amplifiers using a fixed number of input bits to produce each output number. A bias amplifier reduces the number of bits in its output sequence while increasing the bias. The bias-amplified outputs are used separately or, in a preferred embodiment, two or more output sequences are combined into a single combined output. Bias is measured in a measurement processor, using techniques in accordance with the invention. Measurements are then available to be used in a particular application of mind-enabled technology, for example, in a mind-enabled question answering (MEQA) system.

Some methods in accordance with the invention measure statistical deviations in NDRNG output, wherein said deviations are correlated to specific mental intention and said NDRNG output has no randomness correction and contains a predetermined amount of quantum entropy. Some methods generate output having at least 0.5 bits per bit of quantum entropy. In some methods, said NDRNG has an aggregate generation rate of at least 100 Gbps. Some methods comprise generating non-deterministic random numbers in an integrated circuit without using randomness correction. In some methods, said non-deterministic random numbers contain quantum entropy of at least 0.90 bits per bit.

An exemplary method for generating non-deterministic random numbers with a specified target entropy comprises the steps of: sampling an entropy source to produce a sequence of bits; and combining a number, *n,* of bits from the sequence of bits by XORing them together to generate non-deterministic random numbers, wherein *n* is the number of bits calculated to produce the target entropy. In a preferred embodiment, *n* is calculated using the equation, *n* = Log(2 target predictability - 1)/Log(2 single bit predictability - 1), and the target and single bit predictabilities are calculated using the inverse entropy calculation on the target entropy and entropy of said entropy source, respectively. In some embodiments, the NDRNG including the entropy source is located in an integrated circuit.

An exemplary method for designing a non-deterministic random number generator in an integrated circuit with a specified target entropy comprises the steps of: estimating the entropy of an entropy source; calculating the predictability of said entropy source; and calculating the number, *n,* of samples of said entropy source needed to be combined to produce said target entropy. In a preferred method, *n* = Log(2 target predictability - 1)/Log(2 single sample predictability - 1) and the target predictability is calculated using the inverse entropy calculation on the target entropy.

Another exemplary method for designing a non-deterministic random number generator in an integrated circuit with a specified target entropy comprises the steps of: estimating the entropy of an entropy source; calculating the predictability of said entropy source; and calculating the number, *n,* of samples of like entropy sources needed to be combined to produce said target entropy. In a preferred embodiment, *n* = Log(2 target predictability - 1)/Log(2 single sample predictability - 1) and the target predictability is calculated using the inverse entropy calculation on the target entropy.

BRIEF DESCRIPTION OF DRAWINGS

A more complete understanding of the invention may be obtained by reference to the drawings, in which:

FIG. 1 shows a CMOS inverter representing the typical output structure of a CMOS gate in an integrated circuit;
FIGS. 2 - 3 illustrate the details of the states and transitions of CMOS transistors and the relationship between the input and output voltages versus time;
FIGS. 4 - 5 show the shot noise voltages during the periods described for FIGS. 2 - 3;
FIG. 6 shows the normalized junction leakage noise in the CMOS transistors;
FIGS. 7 - 8 depict combined normalized shot noise voltages of the CMOS transistors described in FIGS. 2 - 6;
FIG. 9 depicts a model of a LUT implementing an inverting or non-inverting gate;
FIG. 10 contains a graph in which fractional predictabilities are plotted versus the square root of the multiple of the base sample period that produced each data point;
FIG. 11 represents the normal probability distribution of the rise or fall time of the output of a ring oscillator caused by quantum mechanical noise sources;
FIG. 12 contains a graph in which the Statistical Efficiency of a random walk bias amplifier is plotted as a function of *Pout,* the probability of a "1" occurring in the output bits;
FIG. 13 contains a graph in which the statistical efficiency is plotted as a function of *Pout* (lower curve) for majority voting and the relative efficiency curve (upper curve) with respect to the random walk bias amplifier;
FIG. 14 shows the average number of steps a random walker takes to reach the bound to generate the specified hit rate at the bias amplifier output;
FIG. 15 is a block diagram of a flow sheet for designing a NDRNG that generates bits having a target entropy;
FIG. 16 is a block diagram of a process flow sheet for generating non-deterministic random bits having a target entropy;
FIG. 17 depicts schematically an exemplary mind-enabled device in accordance with the invention comprising a NDRNG that produces two or more parallel output streams, with one or more corresponding converters followed by corresponding bias amplifiers;
FIG. 18 contains a block diagram of mind-enabled question answering (MEQA) system in accordance with the invention;
FIG. 19 contains a block diagram of mind-enabled question answering (MEQA) system in accordance with the invention with a remote user interface;
FIG. 20 contains a block diagram of a basic method of mind-enabled question answering in accordance with the invention; and
FIG. 21 contains a block diagram of an advanced method of mind-enabled question answering in accordance with the invention.

MODES FOR CARRYING OUT THE INVENTION

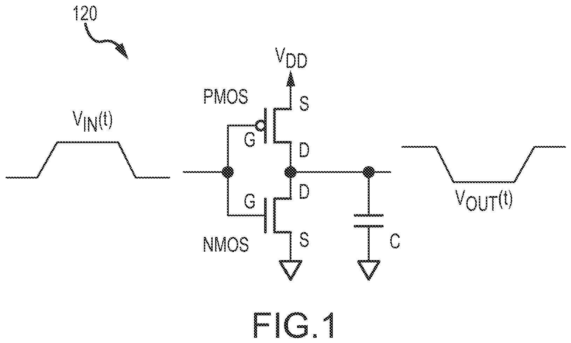

The invention is described herein with reference to FIGS. 1 - 21. It should be understood that the structures and systems depicted in schematic form in FIGS. 1 - 21 serve explanatory purposes and are not precise depictions of actual structures and systems in accordance with the invention. Furthermore, the embodiments described herein are exemplary and are not intended to limit the scope of the invention.

For the sake of clarity, in some of the figures below, the same reference numeral is used to designate structures and components that are the same or are similar in the various embodiments described.

The terms "non-deterministic random number", "true random number", "random bit" "non-deterministic", "non-deterministic bits", "true random bits" and related terms are used in this specification interchangeably to designate a quality of true randomness of a number or bit, which means that the number or bit cannot be calculated or determined with certainty in advance. Non-deterministic random numbers can be thought to be arbitrary, unknowable, and unpredictable. For the sake of brevity, the abbreviated terms "random number" and "random numbers" are sometimes used in this specification synonymously with the terms denoting non-deterministic numbers, such as "non-deterministic random number" and "true random numbers". In this specification, the term "entropy" generally refers to a measure of the disorder or randomness of a system or object. A sequence of non-deterministic random bits uninfluenced by mind has an entropy approaching 1.0 bit of entropy per bit.

The terms "non-deterministic random number generator" (NDRNG), "non-deterministic random number source", true random number generator and related terms are used synonymously in this specification to refer to a device that is operable to generate and to provide non-deterministic random numbers in accordance with the invention. A non-deterministic random number generator in accordance with the invention is sometimes referred to in the art as a source of non-deterministic random numbers or a source of true random numbers. A NDRNG in accordance with the invention includes a physical source of entropy, such as a noise diode, a zener diode, a laser diode, an avalanche diode, a semiconductor junction, a tunneling junction, a qubit, a resistor and a radiation source.

The term "pseudorandom" and related terms in this specification means deterministic or algorithmically generated. It is known that some numbers are able to pass some or all known mathematical tests for randomness, but still be deterministic, that is, calculable or knowable in advance.

The term "quasi-random" and related terms in this specification refers to a number that includes both true random (i.e., non-deterministic) components and algorithmically generated (i.e., deterministic) components.

The term "mind" (and the associated adjective "mental") in this specification is used in a broad sense. The term "mind" includes a commonly accepted meaning of human consciousness that originates in or through the brain and is manifested especially in thought, perception, emotion, will, memory, and imagination. The term "mind" further includes the collective conscious and unconscious processes in a sentient organism that direct and influence mental and physical behavior. Embodiments in accordance with the invention are described herein usually with reference to a human operator and a human mind. It is understood, however, that embodiments in accordance with the invention are also operable to respond to an influence of the minds of other sentient organisms in addition to humans. Also, embodiments in accordance with the invention are described herein usually with reference to a conscious human mind in a state of awareness. It is understood, however, that embodiments in accordance with the invention are operable to respond to an influence of a mind not in a state of conscious awareness. Although the mind of a sentient organism generally is associated with functions of the brain, the term "mind" in this specification is not necessarily limited to functions of the brain, nor is the term "mind" in this specification necessarily related to functions of the brain.

The term "influence of mind" and related terms in this specification refer to influences of mind that are not mediated by traditional energies or forces. In one sense, the terms refer to the influence of mind on the measurement of non-deterministic random numbers.

The terms "quantum mechanics", "quantum mechanical" and related terms in this specification refer to a fundamental branch of theoretical physics that complements Newtonian mechanics and classical electromagnetism, and often replaces Newtonian mechanics and classical electromagnetism at the atomic and subatomic levels. Quantum mechanics is the underlying framework of many fields of physics and chemistry, including condensed matter physics, quantum chemistry, and particle physics. It is one of the pillars of modern physics. Quantum mechanics is a more fundamental theory than Newtonian mechanics and classical electromagnetism, in the sense that it provides accurate and precise descriptions for many phenomena that "traditional" theories simply cannot explain.

The terms "quantum superposition", superposition and related terms in this specification refer to a phenomenon of quantum mechanics that occurs when an object simultaneously "possesses" two or more values (or states) of an observable quantity. It is postulated that when the observable quantity is measured, the values will randomly collapse to one of the superposed values according to a quantum probability formula. The concept of choice (e.g., free will) in a sentient being presupposes the superposition of possibilities.

The terms "quantum entanglement", entanglement and related terms in this specification refer to a quantum mechanical phenomenon in which the quantum states of two or more objects (including photons and other forms of energy) have to be described with reference to each other, even though the individual objects may be spatially separated. In technical terms, their wave functions are inseparable. Quantum entanglement is the basis for emerging technologies, such as quantum computing. Entanglement can be across time or space.

In this specification, the terms "bit", "bits" and related terms are used broadly to include both conventional (or "traditional") bits of information and quantum mechanical bits, or qubits.

In this specification, the term "inference" takes on its usual dictionary meaning of an idea or conclusion that is drawn from evidence and reasoning. Similarly, the adjective "inferable" is used in its usual sense to denote that something can be derived by reasoning or concluded from evidence or premises.

The terms "non-inferable" and "classically non-inferable" denote something cannot be derived by reasoning or from evidence and/or premises. In this context, the words "classical" and "classically" denote traditional or accepted.

Classically non-inferable information is information that cannot be concluded, deduced, derived or decided by reasoning or logic from evidence or information available by classical means.

A qubit is a basic unit of quantum information contained within a physical entity that typically embodies a superposition of two states. A measurement of the qubit's state collapses the superposition randomly to a determined bit with a value of 1 or 0.

Post processing is defined in the present invention as an algorithm designed to reduce the amount of bias or other statistical defect.

Statistical defect means a statistic or statistical distribution of a number of sequences under test that on average is larger in magnitude than theoretically expected from the same test run on perfectly random sequences of equal length. The number of the sequences under test (used for the test) is the number that will produce the desired confidence interval, such as 95% or 99%.

United States Patent No. 8,423,297, issued to Wilber on April 16, 2013, teaches devices and methods for measuring non-deterministic random numbers responsive to an influence of mind.

Combining Entropy

Entropy and predictability are terms with different meanings in different fields. Shannon entropy, $H$, defined for the specific case when only the binary possibilities of 1 and 0 exist, is $H = -(p(1)Log_2p(1)+p(0)Log_2p(0))$, where $p(1)$ and $p(0)$ are the probabilities of a one and a zero occurring respectively, and $Log_2$ is the logarithm in base 2, used when entropy is quantified in bits. For this discussion, $p(1)$ will generally be replaced with predictability, $P$, defined as the probability of correctly predicting the next number in a sequence of numbers, and $p(0)$ will be replaced by $1-P$, where $0.5 \le P \le 1.0$. Substituting predictability for the probabilities, $H_p$ becomes $H_p = -(PLog_2P + (1 - P)Log_2(1 - P))$. Sometimes the value of $H$ is measurable or theoretically calculable and the value of $P$ is required. Then $P = h^{-1}$, where $h^{-1}$ is the mathematical inverse of the $H_P$ equation. The inverse is normally performed numerically since there is no closed-form equation for it. The inverse of the entropy equation has two solutions, but only the one where $P \ge 0.5$ is to be taken.

In addition to the definitions of entropy and predictability, it is essential to know what happens to the entropy content in resultant numbers when numbers containing various types and amounts of entropy are combined. For binary sequences, entropy is combined by applying the exclusive-or (XOR) function to all the bits to be combined to produce a single resultant number. The XOR function, or equivalently the parity function when more than two bits are combined, is used because it was proven to be the most efficient algorithm for improving the randomness properties when combining imperfect random sequences and because its effect on combining entropy sources has been determined by the present inventor. To calculate the predictability and entropy in resultant numbers, the predictability of each bit to be combined must be known. Sometimes it may be easier to estimate or measure the entropy and use the inverse function to get the predictability. The predictability of each number is then converted to a fractional predictability, $P_F = 2P - 1$. (Relative predictability may be considered to be an equivalent term to fractional predictability.) All the fractional predictabilities are then multiplied to produce their product, $P_{PF}$, and the combined predictability, $P_C$ is finally calculated as $P_C = (P_{PF} + 1)/2$. The combined or total entropy, $H_T$, is calculated using the equation for $H_P$.

In the following exemplary calculation, the per-bit entropy in each of three independent sequences of binary bits is $H_1 = 0.60984$, $H_2 = 0.97095$ and $H_3 = 0.88129$. The sequences are combined by performing the XOR function on each of the three bits corresponding to one bit from each sequence to produce a resultant sequence. The inverse entropy calculation is used to find $P_1 = 0.85$, $P_2 = 0.60$ and $P_3 = 0.70$. Their fractional predictabilities are $P_{F1} = 0.7$, $P_{F2} = 0.2$ and $P_{F3} = 0.4$. Their product is, $P_{PF} = P_{F1} \cdot P_{F2} \cdot P_{F3} = 0.056$, and their combined predictability is, $P_C = (P_{PF} + 1)/2 = 0.528$. Finally, using the entropy equation, $H_P = 0.99774$. From this example, it is clear the combined entropy is greatly enhanced relative to the three original entropies. To further illustrate this, combine 32 independent sequences with entropy of only 0.01 in each sequence. The resultant sequence has an entropy of 0.3015, nearly a linear sum of entropy from the 32 sequences.

One may wish to calculate the number of independent sequences to be combined to achieve a target entropy in the resultant sequence. Starting with an entropy of 0.01 in each sequence and a target entropy of 0.99, the fractional predictability of the independent sequences and the resultant sequence was calculated. $P_{FI}$ = 0.99827958499 for the independent sequences and $P_{FR}$ = 0.11760477748 for the target resultant sequence. If the $P_{FI}$ is similar but not the same for each independent sequence, it is possible to use the geometric mean of a sample of different sequences to estimate the appropriate $P_{FI}$ for this calculation. The number of sequences required to provide the target entropy is $n$, where $P_{FR} = P_{FI}^{n}$. The solution to this equation is $n = LogP_{FR}/LogP_{FI}$ = 1243.063. The required $n$ must be an integer and it should be rounded up to the next higher integer to ensure the minimum target entropy. With $n$ = 1244, the combined predictability is, $P_C$ = 0.5587075711, and the resultant entropy is, $H_P$ = 0.990032. The same resultant entropy is achieved by combining non-overlapping blocks of 1244 bits from a single sequence, provided the bits are independent.

From a quantum non-deterministic perspective, the two approaches of combining independent sequences or blocks of bits in a single sequence are equivalent, but if other special properties of quantum measurements are desired, the single measurement of multiple independent sources may be required. Independent quantum sources are expected to be not entangled in a quantum mechanical sense. If the sources are entangled or partially entangled, the combined entropy may be substantially reduced. This is not a problem in most designs in standard integrated circuits, since entanglement does not normally arise except under special conditions that must be created intentionally.

In order to properly apply the design equations for combined entropy, it is necessary to know how to calculate or measure entropy of the various types produced by the entropy source or sources being used in the non-deterministic random number generator (NDRNG). A basic principal in the combination of types of entropy is that they exist independently. That is, they do not mix, interact or change each other's per-bit entropy content. Calculations done for chaotic entropy are unrelated to pseudo-entropy, and calculations done for quantum entropy are unrelated to both chaotic entropy and pseudo-entropy. More specifically, the fundamental unpredictability provided by quantum entropy is neither reduced nor increased by combining with either pseudo- or chaotic entropy, and the unpredictability of chaotic entropy is neither reduced nor increased by combining with pseudo-entropy. However, these combinations provide an improvement in the statistical properties of the resulting sequences. Following are some examples to illustrate this principle.

(1) A chaotic entropy source is measured to produce independent binary bits with a probability of a "1" occurring, $p(1)$ = 0.55. The chaotic entropy of the measured bits is 0.992774 as calculated using the Shannon entropy equation given above. With a block length of 7 bits and a total of 1 million bits in the test sequence, the test gives a per-bit entropy of 0.99268(43) ($\pm$ 1 standard deviation (SD)). While the entropy is fairly high, the predictability is 0.55, which is unacceptable for most applications. Therefore, the chaotic bits are combined with a pseudo-entropy sequence by XORing one bit from each sequence to produce bits in a resultant sequence. By definition, there is no actual entropy, i.e., $H$ = 0.0, in the pseudo-entropy sequence, hence its $P$ = 1.0 and $P_F$ = 1.0. $P_F$ = 0.10 for the chaotic bits and $P_{PF}$ = 0.10 for these two sequences combined. Finally, their total combined predictability is, $P_T$ = 0.55 and $H_P$ = 0.992774 per bit. These values are exactly the same as the original bits from the chaotic entropy source, but the statistical properties of the resultant sequence have been corrected so the statistically measured entropy will appear to be 1.0. However, given appropriate computational tools and knowledge of the pseudo-entropy algorithm and initial state, the bits in the resultant sequence are still 10 percent more predictable than bits with chaotic entropy of 1.0.
(2) An entropic source produces bits with 0.8 bits per bit of total entropy, which includes 0.1 bits per bit of quantum entropy. The goal is to design a non-deterministic random number generator with 0.99 bits of quantum entropy per output bit. In a mixed entropy source of this type, the amount of quantum entropy must be estimated or calculated from theoretical knowledge of the source itself. While the total entropy can be approximately measured, there is no purely statistical measure that can distinguish between the two types. Combining chaotic entropy with quantum entropy does not change the degree of quantum unpredictability and does not change the amount of quantum entropy. This is true whether the two types of entropy are mixed because of the nature of the source or by combining bits from separate sources. To clarify the difference between the entropy types, consider that just prior to the measurement of a bit, the quantum entropy source exists in a superposition of states that may represent either a one or a zero, describable only as a probability of the two possible states. The chaotic entropy component follows a deterministic and at least theoretically predictable signal evolution. Its non-determinism arises both from a lack of access to and measurement of the variables that affect the signal, and to their computational intractability. In a manner similar to the calculation above, the addition or presence of chaotic entropy may increase the statistically-measured randomness of the sampled or resultant numbers, but it has no effect on the amount of quantum entropy.

The predictability arising from the quantum entropy is calculated. The inverse entropy calculation yields $P$ = 0.987013 and $P_{FI}$ = 0.974026. The fractional predictability of the target resultant bits is, $P_{FR}$ = 0.1176048. Finally, the number of bits or independent sequences that need to be combined is, $n = LogP_{FR}/LogP_{FI}$ = 81.33, rounded up to 82. Then, the statistical defect in the resultant sequence is calculated. From the total entropy of 0.8, $P$ = 0.756996 and $P_{FI}$

= 0.513992. Using $n$ = 82, the resultant fractional predictability is, $P_{FR} = P_{FI}^{n} = 1.988 \times 10^{-24}$, which is also the approximate size of statistical defects in the resultant sequence. This level of defect is immeasurably small under any testing conditions, so randomness correction or conditioning is unnecessary. The corresponding total entropy is, $H_T = (1 - \varepsilon)$ bits per bit, where $\varepsilon = 1.85 \times 10^{-48}$, while the quantum entropy is $H_Q = 0.990346$. The total entropy per bit cannot exceed 1.0, so the output sequence has an entropy of 0.990346 quantum bits per bit and 0.009654 - $1.85 \times 10^{-48}$ chaotic bits per bit.

Entropy from Various Sources

There are two broad types of physical noise sources that relate to the production and measurement of entropy. They are extrinsic and intrinsic sources. Extrinsic sources are those which are not directly part of the entropy source being measured and are coupled to the source by electromagnetic fields, power supply variations or even mechanical vibrations. Intrinsic sources are inherent in the generator (noise) source being measured and arise from fundamental physical principles. In transistors and integrated circuits, the intrinsic sources include shot noise from diffusion and tunneling currents, thermal noise, flicker or 1/f noise, and generation-recombination noise. Most extrinsic sources can be eliminated or reduced by proper design and shielding of the generator source, while intrinsic sources are usually not reducible below their theoretical value.

The design equations presented in this specification require a measurement or estimate of the lower bound of chaotic and/or quantum entropy in the particular generator source being used. Most modern-day digital integrated circuits are constructed using MOS transistors in a complementary or CMOS configuration. The entropy produced in these transistors is measureable by amplifying their analog noise signals or by detecting variations in transition times or jitter in an oscillating signal passing through them. The latter is done by sampling a free-running ring oscillator with another oscillator, or by sampling an output transition that has been passed through many stages of a delay line, or by a combination of both. A ring oscillator is a multi-stage delay line containing an odd number of inverting elements with its output connected to its input. Each element in the delay line or ring oscillator adds a certain amount of jitter to the signal transition as it passes through. The statistical distribution of the jitter due to intrinsic sources is approximately normally distributed, and the total cumulative jitter from these sources is the jitter introduced by a single stage multiplied by the square root of the number of stages the transition has passed through before being measured. As a practical matter, the effective jitter is that which accumulates in a continuously operating system in the time between measurements. Delay line sources or ring oscillators that are reset to a predetermined state prior to each measurement accumulate jitter from the time a signal is initiated or the ring enabled.

Entropy Source in a CMOS IC

A typical integrated CMOS gate will have three predominant noise components affecting its output. One is extrinsic and is a type of power supply noise known as digital switching noise. Switching noise is a high frequency voltage variation caused by the combined current impulses that occur as many logic gates in the same integrated circuit switch from high to low or from low to high. Individual switching impulses may be deterministic, but the combination of hundreds or thousands of these impulses are not possible to observe and predict, especially if there are many free-running oscillators operating in the same IC. Switching noise is a type of chaotic noise. Extrinsic noise should not be solely relied on as an entropy source in a secure random number generator system because of the potential to observe and even inject patterns into the generator circuit.

The other noise components are intrinsic. They are thermal or Johnson noise and shot noise. Thermal noise is caused by thermal agitation of charge carriers in any resistive element. This noise is chaotic and non-deterministic. Its amplitude is proportional to the square root of absolute temperature, resistance and bandwidth. Shot noise occurs because charge carriers, which are tiny indivisible packets of the current flow, may bunch up or spread out in a statistical distribution. It is fundamentally non-deterministic and its amplitude is proportional to the square root of the total current flow and bandwidth. It may be formally considered either classical or quantum mechanical or a mixture of both depending on the circumstances of its generation. Shot noise occurs when charge carriers pass through a potential barrier such as a diode junction in MOS transistors. Shot noise in MOS transistors consists of three major components, which are sub-threshold leakage, gate direct tunneling leakage and junction tunneling leakage.

Estimating Shot Noise in nMOS Transistors and CMOS Circuits

Charge carriers must cross an energy gap, such as a p-n junction, or tunnel across an insulating boundary to exhibit shot noise phenomena. Charge carriers that do not cross a barrier, such as electrons flowing in normal conductors, are highly correlated due to electrostatic forces and the Pauli principle, which reduce shot noise to low levels. Shot noise results from statistical variations of the flow of uncorrelated, quantized charge carriers and is proportional to the square root of the average number of carriers crossing a boundary in a given time interval, which is a definition of current. Shot noise in MOS transistors arises from sub-threshold leakage, tunneling across the insulating layer under the gate, known as gate leakage or gate oxide leakage, and junction tunneling leakage due to high electric fields across reverse-biased p-n junctions. In a CMOS structure, both the pMOS and nMOS transistors contribute to the leakage into the load capacitance (also called node or output capacitance), C, where the variations in current appear as voltage variations in the output. In addition, both the gate leakage and junction leakage are partitioned into source leakage and drain leakage components. At their peak value in symmetrical transistors, the tunneling currents are split equally between drain and source. When each transistor is turned off, its sub-threshold leakage and junction leakage are maximum and its gate leakage is minimum. As each transistor is turned on, its sub-threshold leakage and junction leakage decrease to essentially zero and its gate leakage increases to maximum. The magnitude of the noise voltage across the load capacitance due to the sub-threshold leakage is calculated by integrating the leakage shot noise current delivered to the load capacitance through the equivalent output resistance over the frequency spectrum of the noise. It has been shown that shot noise in sub-threshold MOS transistor leakage accounts fully for what was previously thought of as thermal noise.

The noise voltage is $V_S = \sqrt{kT/C}$, where $V_S$ is the shot noise voltage in volts root-mean-squared (rms), $k$ is Boltzmann's constant, $1.38065 \times 10^{-23}$, $T$ is the temperature of the CMOS transistors in degrees Kelvin, and $C$ is the load capacitance in Farads. Gate leakage and junction leakage are only slightly affected by temperature but are strongly dependant on supply voltage. All three leakage currents are essentially independent in a simple inverter, but they become state dependant in more complex gate structures and transistor stacks with multiple inputs.

FIG. 1 schematically represents a typical CMOS inverter 120.

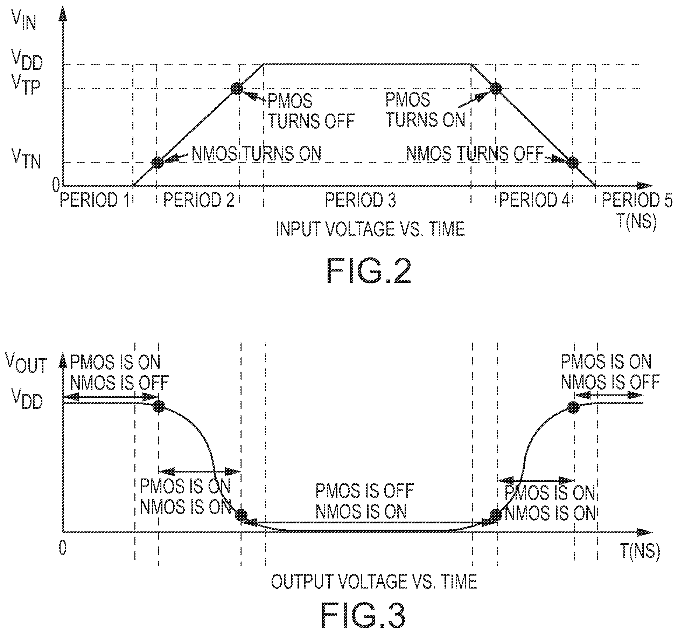

FIGS. 2 - 3 illustrate the details of the states and transitions of transistors of inverter 120 in FIG. 1. FIG. 2 depicts the input voltage versus time in nanoseconds (ns). FIG. 3 depicts the output voltage versus time. In Period 1, the input is near zero volts (a low logic state) and the output is near $V_{DD}$ (a high logic state). The pMOS transistor is turned on and the nMOS transistor is off. In Period 2, the input is in transition from a low to a high state. During this period the nMOS gate voltage, $V_{GS}$, changes from sub-threshold, to the linear region and finally turns the nMOS transistor fully on. During the same period, the pMOS transistor's $V_{GS}$, initially near negative $V_{DD}$, increases to near zero volts, turning the pMOS transistor off. In Period 3, the nMOS transistor is turned on and the pMOS transistor is turned off. Period 4 is a high-to-low, or negative transition of the input voltage. In this period, the transistors follow the steps of Period 2 in reverse, ending in Period 5 with the transistor states the same as in Period 1.

MOS Transistor Leakage Currents

Table 1 includes values of estimated maximum leakage currents for 65nm nMOS and pMOS transistors normalized by dividing by the sub-threshold leakage of the pMOS transistor. Temperature is 45°C and $V_{DD}$ is 1.2V. The width of the pMOS transistor is scaled to 2X the nMOS transistor to balance approximately the lower mobility in the pMOS device. This also scales the pMOS leakage values by the same factor since they are directly proportional to width. Some skilled in the art have estimated the junction leakage to be higher than the gate leakage in 65 nm transistors, but a conservative estimate equal to gate leakage is used for calculations in this specification.

Table 1

|  | nMOS | pMOS |
| --- | --- | --- |
| $I_{sub}$ | 0.77 | 1.0 |
| $I_{gate}$ | 0.39 | 0.035 |
| $I_{junc}$ | 0.39 | 0.035 |

When the source-drain voltage approaches zero, the gate leakage is partitioned equally between the source and the drain. This condition exists when one transistor as shown in FIG. 1 is turned on and the other is off. The transistor that is turned on has a source-drain voltage near zero and the gate leakage is maximum, but only 50 percent of the leakage current flows into the drain (source-drain partition), where it contributes to the shot noise voltage at the output of the gate. The gate leakage in the transistor that is turned off is orders of magnitude less than the one turned on, so it is effectively zero. Junction leakage is maximum for the transistor that is turned off, with its source-drain voltage at maximum. In this state, the total junction leakage is partitioned about equally between source and drain.

Noise Voltage from Leakage Currents

The noise voltages due to gate leakages into the load capacitor, C, can be derived by integrating the shot noise from the leakage currents. However, a simple estimate of the normalized gate leakage shot noise voltages is made by setting them equal to the square root of the ratio of gate leakage current to sub-threshold leakage current. The normalized nMOS and pMOS gate leakage currents from Table 1 are first multiplied by the geometric mean of the pMOS and nMOS sub-threshold leakage currents, which approximately accounts for the differences in effective resistance and resulting bandwidth of the two transistor types. Then, the currents are divided by two (partitioned), which gives 0.17 for the nMOS and and 0.015 pMOS, and finally the square root of these values is 0.41 V rms and 0.12 V rms, respectively. The normalized shot noise voltages from junction leakages are calculated in the same way as for the gate leakages. In contrast to the sub-threshold leakage that has a period during a transition where neither transistor is producing leakage, the gate leakages and junction leakages have a significant value for both transistors during a transition.

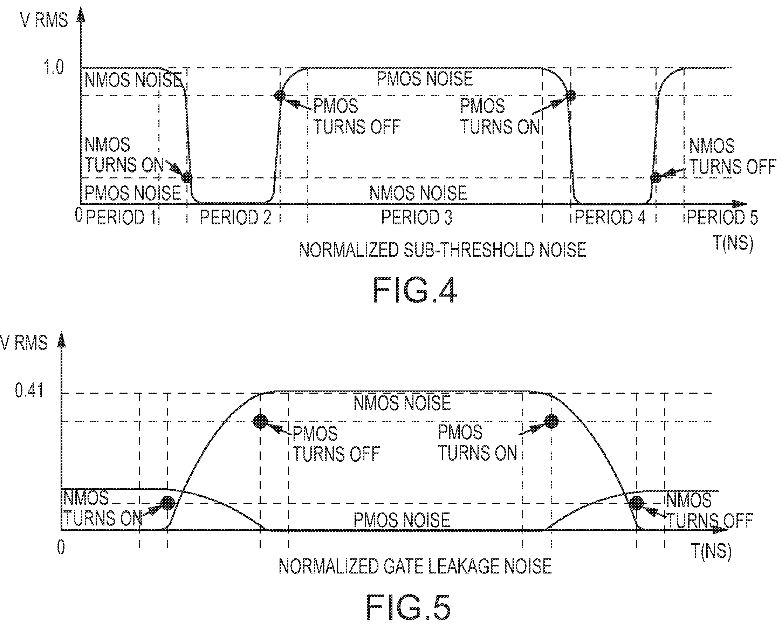

FIGS. 4 - 6 show the shot noise root-mean-square voltages (V rms) during the periods described for FIGS 2 - 3. The noise voltage levels in FIGS. 4 through 6 are normalized by dividing by the maximum of the sub-threshold voltage levels. Table 2 summarizes the normalized shot noise voltages for the various leakage types for nMOS and pMOS transistors. Note that even though the sub-threshold currents are not quite equal for nMOS and pMOS transistors, this leakage is a diffusion process in thermal equilibrium and the equipartition theorem indicates the total noise voltage for both transistors together is, $V_S = \sqrt{kT/C}$.

Table 2

|  | nMOS | pMOS |
| --- | --- | --- |
| $I_{sub}$ | 1.0 | 1.0 |
| $I_{gate}$ | 0.41 | 0.12 |
| $I_{junc}$ | 0.41 | 0.12 |

FIG. 4 shows only the sub-threshold leakage shot noise voltages. Sub-threshold leakage current flows through each transistor when its gate-source voltage, $V_{GS}$, is near or below the threshold voltage, and it is maximum when $V_{GS}$ is zero volts and the transistor is turned off. Note, the $V_{GS}$ is negative for the pMOS transistor and positive for the nMOS transistor. During Period 1 the nMOS transistor is off and its leakage noise is maximum so its normalized value is 1.0. At the same time the pMOS transistor is turned on so its sub-threshold leakage noise is zero. During Period 2 the gate voltage increases through the threshold voltage of the nMOS transistor and the sub-threshold noise rapidly decreases to zero as the transistor turns on. When the gate voltage increases further and nears the threshold voltage of the pMOS transistor, it turns off and its sub-threshold leakage shot noise voltage rapidly increases from zero to its maximum at the end of the period. During Period 3 the pMOS noise is at its maximum and the nMOS noise is zero. In Period 4 the pMOS transistor turns on and the nMOS transistor turns off, changing the noise levels in reverse order to Period 2. Finally in Period 5 the noise levels are the same as in Period 1.

FIG. 5 shows the normalized shot noise voltage due to gate tunneling leakage current. Gate leakage is a challenge for integrated circuit (IC) designers as the feature dimensions are constantly reduced in order to reduce power consumption, increase speed and pack more transistors into each IC. As dimensions are scaled, the thickness of the insulating oxide layer under the gate is also decreased. This results in exponentially increasing gate leakage current, which has become a significant component of the total power dissipation in modern CMOS IC's through the 65nm technology node. Subsequent nodes will begin to rely on high-K gate dielectrics and other methods to reduce this leakage component, or at least keep it from increasing.

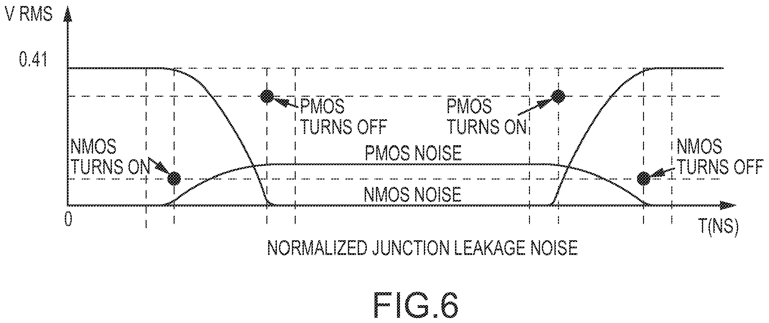

FIG. 6 shows the normalized shot noise voltage due to junction tunneling leakage current. Junction leakage is a significant new issue for deep sub-micron transistors starting at about 65nm and smaller. Simple dimensional scaling is not sufficient to maintain desired performance at these dimensions. High substrate doping and "halo" profiles near the source and drain junctions of the channel reduce the depletion region widths but also dramatically increase tunneling current through these junctions when they are reverse biased.

It should be noted that manufacturers of MOS and CMOS devices and integrated circuits make every effort to reduce leakage and noise any way they can devise. This is required to reduce power consumption and increase reliability of their designs, especially as the dimensions of the circuitry is reduced to pack ever-increasing numbers of transistors in a given area. For the purposes of non-deterministic random number generation, and especially generation of random numbers containing higher amounts of quantum entropy, the understanding of the factors affecting leakage can be used to increase rather than decrease the leakage and hence the shot noise in specialized NDRNG circuits. The jitter at the output of a CMOS gate is inversely proportional to the slew rate. Therefore, decreasing the slew rate directly increases the jitter and hence the entropy. Gate leakage is proportional to the area of the gate and inversely proportional to the thickness of the oxide insulating layer under the gate. Increasing the gate area or decreasing the insulation thickness increases the gate leakage current and its related shot noise. Decreasing the channel length or otherwise reducing the size of the threshold voltage of the transistors increases sub-threshold leakage and its shot noise contribution. Other factors, such as doping levels and surface area of the junctions and their depth, also affect total leakage. Several of these factors are easily modified in normal CMOS design to greatly increase the shot noise and hence the quantum entropy available for sampling.

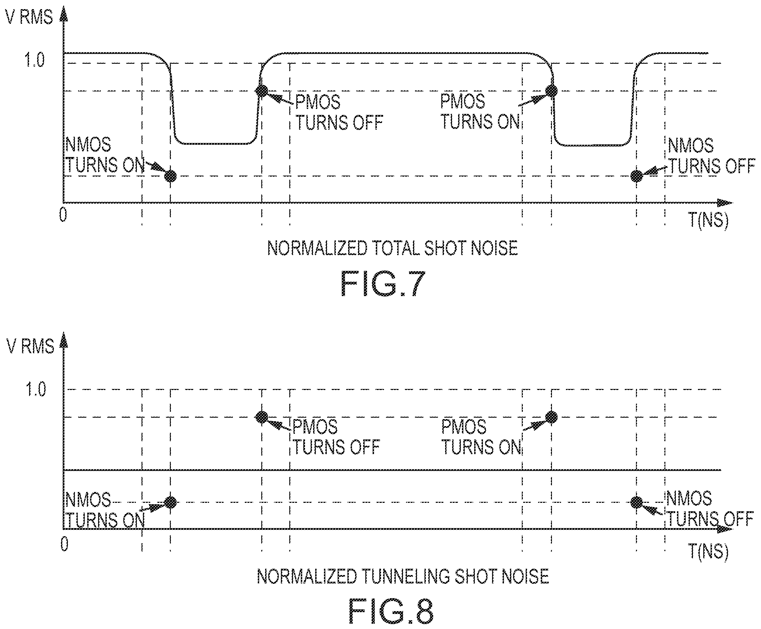

FIGS. 7 - 8 depict the combined normalized shot noise voltages. The components of shot noise voltage are independent and approximately normally distributed, so the sum of these noise sources is the square root of the sum of the squares of the individual sources (added in quadrature). FIG. 7 depicts the total normalized shot noise voltage at the output of the CMOS gate. This is the sum of the sub-threshold noise voltage of FIG. 4, the gate leakage noise voltage FIG. 5 and the junction leakage noise voltage in FIG. 6 for both the pMOS and nMOS transistors added in quadrature. The normalized maximum value in Period 1 is 1.087V rms, in Period 2 the value is 0.427V rms, and in Period 3 the value is 1.087V rms. The weighted average for both stable states and transition states of the transistors is

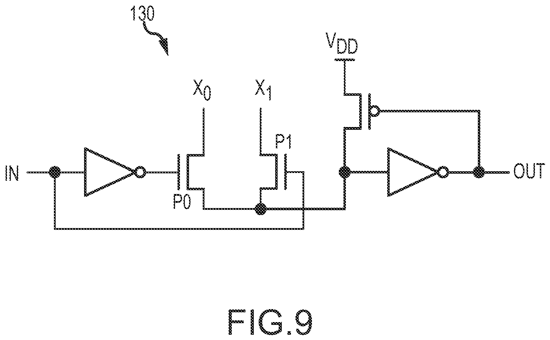

$$V_S = \sqrt{1.087^2 t_{fs} + 0.427^2 (1 - t_{fs})},$$ where $t_{fs}$ is the fractional time the signal is stable. The example calculations in this specification use two ring sizes of 19 and 24 LUT delays per cycle, each including 2 LUT delays during which a transition occurs. The corresponding $V_S$ values are 1.037 and 1.048 times the normalized sub-threshold values, respectively. When tunneling leakage is not included, these two values become 0.946 and 0.957, respectively, showing gate leakage and junction leakage together only contribute about 9% to the total shot noise voltage. A value of $V_S$ = 1.0 times the nominal value is used throughout this specification for the total from all sources. When only gate tunneling leakage and junction leakage are taken, as depicted in FIG. 9, $V_S$ is about 0.427 times the nominal value.

EXAMPLE 1

An NDRNG was designed in a CMOS IC, that is, in a 65-nm Field-Programmable Gate array (FPGA). Such an FPGA is one of the devices in the Cyclone III family commercially available from Altera Corporation. A specific device in this family is the EP3C10E144C8N, which contains 10,320 programmable logic elements, each comprising one 4-input look-up table (LUT) and one latch. Each LUT is programmable to create a wide range of logic functions such as AND, OR and XOR. To estimate the theoretical quantum entropy available from each LUT requires a reasonable model of its physical design and operation.

A first-order approximation of a LUT in Altera Cyclone III FPGAs is to treat it as a normal logic gate, such as a simple inverter 120 shown in FIG. 1. It is necessary to know the slew rate of the inverter and the load capacitance, C, to make the first estimate of quantum entropy. The slew rate is calculated from rise and fall times, which are estimated from the propagation delay through the LUT. Although there is no simple relationship between these two parameters, rise and fall times are approximately equal to or a little longer than delay times in a simple CMOS inverter circuit. The propagation delay, $\tau_p$, of the LUT is found by measuring the average frequency of several ring oscillators and calculating $\tau_p$ = 1/($2 n_{lut} f_{ring}$), where $n_{lut}$ is the number of LUTs in the ring and $f_{ring}$ is the frequency of oscillation. A ring oscillator was designed with 11 non-inverting gates and one inverting gate which were arranged vertically in a single logic block (LAB) to minimize interconnect delays and variations between rings. An average ring of this design oscillated at 155 megahertz (MHz) giving a propagation delay of 268.8 picosecond (ps). The Altera compiler does not always select the minimum delay path through input "D" of the 4-LUT, but sometimes routes the signal through input "C". This results in a decrease in ring oscillator frequency and a proportional increase in average delay time. The rise and fall times, which are assumed to be equal by design, are approximately equal to the propagation delay. The slew rate is $0.8(V_{OH}-V_{OL})/T_r$, where $V_{OH}$ and $V_{OL}$ are the output high and low voltage levels respectively, and $T_r$ is the rise (or fall) time. $V_{OH}-V_{OL}$ is effectively equal to $V_{DD}$ or nominally 1.2V, giving a slew rate of 3.57 V/ns.

The load capacitance was first estimated by using the Altera Power Calculator to calculate the dynamic power consumed by one LUT. Dynamic power is composed of two components: load power, $P_L$, which is caused by charging and discharging the load capacitance, and short circuit power, $P_{SC}$, which is due to current that flows when both transistors are turned on during a transition. The total dynamic power is

$$P_{DYN} = C_L V_{DD}^2 f + V_{DD} I_{max} \left( \frac{T_r + T_f}{2} \right) f$$

where $C_L$ is the load capacitance, $V_{DD}$ is the supply voltage, $f$ is the switching frequency and $I_{max}$ is the maximum short circuit current during a transition. The short-circuit power is typically between 10 and 20% of the total dynamic power. For this estimate, $P_{SC}$ is conservatively taken as 10% of the total dynamic power. From the power indicated by the Altera Power Calculator, $C_L$ = 120 femto-Farads (fF).

The power calculator does not take into consideration the specifics of input address configuration and fan out of the LUTs used in a ring oscillator, so a measurement was made to refine this result. The equivalent of 135 - 12-LUT rings was placed in an FPGA. The inverting gate in each ring was configured to be turned on or off by using an external jumper. The current difference with the rings turned on versus off was 33.57 milli-Amps (mA), $V_{DD}$ was 1.222V and a ring oscillator frequency of 155 MHz was measured. Taking the fraction of short circuit power at 10% of dynamic power yields, $C_L$ = 98.5 fF. This value is used in the following calculations. Using 20% short-circuit power would have resulted in a $C_L$ of 87.6 fF and a 6% increase in shot noise voltage.

The shot noise voltage at the output of the LUT is the noise voltage developed across the load capacitance due to shot noise in leakage currents in the CMOS transistors. While an in-depth calculation of the shot noise is very complex, an approximate solution is quite simple. The average shot noise voltage is about $V_S = \sqrt{kT/C}$, where $V_S$ is the noise voltage, in volts rms, $k$ is Boltzmann's constant, $1.38065 \times 10^{-23}$, $T$ is the temperature of the CMOS transistors in degrees Kelvin (about 318 degrees or 45 degrees Centigrade during operation) and C is the load capacitance in Farads. Solving for $V_S$ gives $2.11 \times 10^{-4}$ volts rms in the output of the LUT due to shot noise. Now the voltage noise must be converted to a transition time jitter. This is simply the shot noise voltage divided by the slew rate, which gives $J_{LUT}$ = $5.91 \times 10^{-14}$ second (s) rms. Thus, 59.1 femtosecond (fs) rms is the transition jitter in a single LUT due solely to shot noise.

Approximate Quantum Entropy in the Simplified LUT Model

In a ring oscillator, a single edge continuously passes through one LUT after another. As this happens, the time jitter of that edge accumulates according to the equation $J_T = J_{LUT} \sqrt{n_L}$, where $J_T$ is the total jitter and $n_L$ is the number of LUTs through which the edge has passed. For this example, a ring oscillator was designed with 12 gates including one inverting gate and 11 non-inverting gates. Each cycle of the ring oscillator is composed of 12 delays for the negative half-cycle and 12 delays for the positive half-cycle, so the total period is 24 times 268.8 picosecond (ps) = 6.451 nanosecond (ns) resulting in a frequency of 155 MHz. The total jitter for each cycle is $\sqrt{24} \times 59.1 \times 10^{-15} = 290$ fs rms. The fractional jitter, $J_F$, is the total jitter per cycle divided by the cycle period. $J_F$ = $2.9 \times 10^{-13}$/ $6.45 \times 10^{-9}$ = $4.5 \times 10^{-5}$ rms. United States Patent No. 6,862,605, issued March 1, 2005, to Wilber, discusses how to calculate the entropy of a sampled oscillatory signal given rms jitter as a fraction of the oscillatory signal period. The entropy is calculated numerically by first calculating the average probability of correctly predicting the next sampled value of the oscillator signal and then using Shannon's entropy equation as described above. The fractional jitter must be adjusted to an effective jitter, $J_E = J_F \sqrt{f_{osc}/f_{samp}}$, where $f_{osc}$ is the ring oscillator frequency and $f_{samp}$ is the sampling frequency. This adjustment accounts for the fact that the effective cumulative jitter at each sample time is that jitter which accumulates since the previous sample. The following Mathematica program performs the required numerical calculations:

```
prob[mu_, rho_]:=Sum[CDF[NormalDistribution[mu, rho], x+1/2]-
CDF[NormalDistribution[mu, rho], x], {x, -Round[6 rho], Round[6 rho]}]
avgprob[rho_, hf_, lf_]:=(ro=rho Sqrt[hf/lf]; divisions=Max[1000, Ceiling[5/ro]];
If[ro>.9, .5, N[2Sum[prob[mu, ro], {mu, 0, 1/2, 1/(4divisions)}]/(2divisions+1)-
Sum[prob[mu, ro], {mu, 0, 1/2, 1/(2divisions)}]/(divisions+1)]])

H[rho_, hf_, lf_]:=(apr=avgprob[rho, hf, lf];
(-1/Log[2])(apr Log[apr]+(1-apr)(Log[1-apr])))
```

The function that calculates entropy is H[rho_, hf_, lf_], where the arguments, rho, hf and lf are the fractional jitter, $J_F$, and the ring oscillator and sampling frequencies respectively, and the output, apr, is the average predictability, $P$. When the fractional jitter gets smaller, the number of divisions used in the function avgprob must be increased. $5/J_E$

divisions rounded up to the next higher integer yield about three significant digits of accuracy for $J_E$ down to 0.00001. Using the values of $J_F$, hf and If for this example design, $4.5 \times 10^{-5}$ rms, 155 MHz and 128 MHz respectively, the above program gives $H = 0.0011904$, $P = 0.999921012$ and $P_F = 0.99984202$.

NDRNG Design using Simplified LUT Model

To achieve a target quantum entropy of 0.99 bits per bit in the final output of a NDRNG, a number of bits of the type just described are combined by XORing in non-overlapping blocks to produce each output bit. That number of bits is,

$$n = Log(0.1176048) / Log(0.99984202) = 13,548.$$

A Better LUT Model

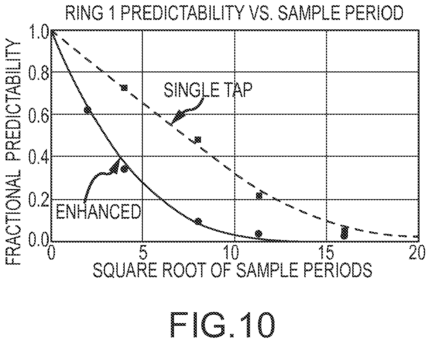

A LUT does not seem to be well approximated by a simple gate model. A simplified LUT 130 depicted in FIG. 9 is a better model of a LUT implementing an inverting or non-inverting gate. Variations in typical LUT design may include CMOS pass transistors versus the nMOS shown here, and an additional inverter prior to the final signal *OUT*.
A 4-LUT or four-input LUT is actually a type of static RAM (SRAM) with the four inputs multiplexing a data path through pass transistors from one of 16 possible SRAM bits to the data output. When a single input is needed the minimal-delay circuit using only the final multiplexor and pass transistors, P0 and PI, is required to be active. The rest of the multiplexors and pass transistors of the 4-LUT are typically inactive and are not shown in FIG. 10. The active input, *IN,* selects one of two data paths from the output of the SRAM (or previous multiplexor stage) by turning on one pass transistor while turning the other one off using the complement of *IN.* The output of the active pass transistor is connected to the input of an inverter, which provides a buffered output for the LUT. The output buffer includes a pMOS transistor on its input that actively bootstraps slowly rising input voltages when nMOS pass transistors are used. The gate is either inverting or non-inverting depending on the values set for $X_0$ and $X_1$.
For purposes of shot noise calculations, these stages of the LUT are more closely modeled by two consecutive CMOS inverters, each with its own load capacitance. The rise and fall times and the load capacitances are taken to be equal for the inverters, and are set to half their respective values for the simple LUT model. The noise contributed by the pass transistors and bootstrap transistor is not explicitly included in this model. The estimated slew rate becomes $7.14 \times 10^9$ volts/second, and the load capacitances, which were lumped together in the simple model become 49.25 fF. The shot noise becomes $2.9854 \times 10^{-4}$ volts rms in each of the two inverter stages, and the jitter is $4.18 \times 10^{-14}$ s rms. The total jitter for these two stages in the LUT $\sqrt{2} \times 4.18 \times 10^{-14} = 5.91 \times 10^{-14}$ s rms, the same amount calculated for the simpler model.
While the two-inverter model is still a somewhat crude representation of the exact implementation of the LUT circuitry, this exercise indicates the results obtained by using an improved model do not diverge from those obtained by using lumped values in the simple model.

EXAMPLE 2

A 32 Mbps Quantum NDRNG

A specific design of an NDRNG in an Altera Cyclone III FPGA followed the general form used in the preceding example. The sampling of entropy was made more efficient, that is, required fewer resources in the FPGA, by placing three connections or taps at three equally spaced positions on the 12-LUT ring oscillator. These three tap signals were combined in a 3-input XOR gate to produce an enhanced ring oscillator output signal at three times the ring oscillation frequency. The three signals provided the equivalent of three independent entropy sources because the time spacing between the taps was very large compared to the jitter distribution at each tap (over 10,000 standard deviations), and therefore the amount of mutual entropy due to sampling of overlapping jitter distributions was insignificant. The tripled, enhanced output frequency tripled the probability of sampling a ring oscillator output signal exactly during a transition when the shot noise-induced jitter made the measurement quantum mechanically indeterminate. The fractional predictability from the enhanced output was the fractional predictability of the single tap output cubed.
The enhanced outputs of multiple rings of the design described above, but of different oscillatory frequencies, is combined by XORing them together. XORing multiple enhanced ring outputs produces a resultant signal containing the sum of the individual signal frequencies. There are two limitations with this approach: first, the combined frequency should not exceed the switching speed of the LUT; and second, the fractional jitter must still be small enough so that each transition is effectively independent of all others to maintain insignificant mutual entropy during sampling. The maximum switching frequency of a LUT in the exemplary FPGA was about 1.8 GHz. An enhanced oscillator signal in the exemplary design had an average frequency of 456.7 MHz and a maximum combined frequency of 1.15 GHz. Combining more than two enhanced oscillator outputs caused significant loss of sampled transitions because the LUT circuitry was not fast enough to track them. The geometric mean of the number of LUTs per full cycle in the rings of this design is 19.057. This yielded a mean jitter of $\sqrt{19.056} \times 59.1 \times 10^{-15} = 258 \text{ fs rms}$ and a fractional jitter, $J_F$ = 2.58×10⁻¹³/ 5.122×10⁻⁹ = 5.037×10⁻⁵ rms. The entropy per single sampled tap was 0.001463, yielding a fractional predictability of 0.99980156 and finally, $n$ = 10,786 taps for a target quantum entropy of 0.99. The weighted average number of taps in an enhanced output from a ring in the PQ32MU design was 2.3477, and the number of taps from two enhanced outputs combined was 4.6954. Then, 315 of these combined outputs were combined further to produce a raw data stream, with a total of 1479 taps. Three of these raw data streams from three duplicate generators were combined by XORing them to produce a single quantum random bit stream produced from sampling 4,437 taps. Finally, four sequential bits from the combined streams were XORed together to produce output bits at 32 Mbps, each of which was produced from sampling a total of 17,748 original taps. The fractional predictability of the output bits, based solely on shot noise was 0.02953, and the predictability was 0.515, giving a quantum entropy of 0.9994 bits per bit; substantially above the design goal of 0.99 bits per bit. The criteria and process steps for this design are summarized below:

- Oscillator period with 19.056 LUTs per period is 5.122 ns, yielding a mean ring oscillator frequency of 195.2 MHz.

- $J_{LUT}$ = 5.91×10⁻¹⁴ s rms.

- Ring oscillator fractional jitter, $J_F$ = 5.037×10⁻⁵ rms.

- Entropy per sampled tap = 0.001463.

- $P$ = 0.99990078 and $P_{FI}$ = 0.99980156.

- $n$ = $Log$(0.1176048)/$Log$(0.99980156) = 10,786 samples for $H$ > 0.99.

- Weighted average of 2.3477 sample taps per ring enhanced output, times 2 rings (XORed) per sample, times 15 samples per channel, times 21 channels per output stream, times 3 streams, times 4 samples per 128 million samples per second in the combined output stream = 32 MHz output rate composed of 17,748 tap samples per bit.

- $P_{FR} = P_{FI}^n = 0.99980156^{17748} = 0.02953.\ P = (0.02953 + 1)/2 = 0.5147.$

- Final quantum entropy in the output stream is, $H_Q$ = 0.9994 bits per bit. For a minimum of two of three redundant streams combined as required by the design, the quantum entropy is 0.993. This is an emergency backup mode in case of partial generator failure.

- Higher quantum entropy can be achieved at the expense of the final output bit rate. XORing two consecutive non-overlapping bits in the output sequence (a jumper-selectable operating mode) produces a quantum entropy of 0.99999945 bits per bit at a rate of 16 million bits per second (Mbps).

Determining Chaotic Entropy in the NDRNG Design

Along with the quantum entropy derived from shot noise, a substantially larger amount of chaotic entropy was also present in each sample. This entropy was due to power supply noise, digital switching noise, other types of transistor noise and thermal noise. Rather than trying to quantify these various sources from basic principles, it was easier to measure directly the combined result of all chaotic noise sources. The quantum noise component was much smaller than the total noise so its contribution did not alter the empirical measurement of chaotic entropy sources.

The jitter caused by non-quantum chaotic sources was determined by measuring the entropy at a number of different sampling periods for individual taps in a ring and for the enhanced output of that ring, and finding the jitter that produced the best curve fit to the sampled data consistent with the entropy-combining model. The measured entropy was first converted to a predictability, $P$, by using the inverse entropy calculation. The predictabilities were then converted to fractional predictabilities, $P_R$. The fractional predictabilities were plotted in the graph of FIG. 10 as a function of the square root of the multiple of the base sample period that produced each data point.

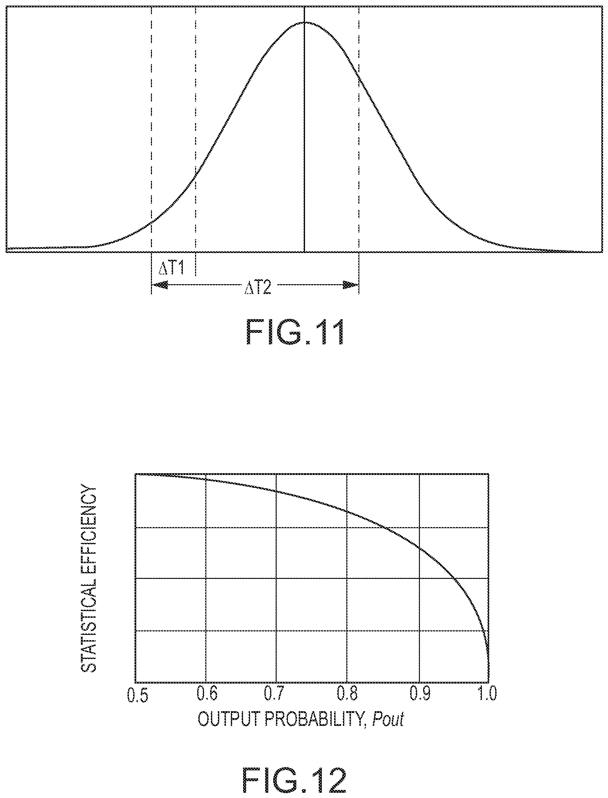

For this measurement, a ring oscillator composed of 12 LUTs with 3 equally spaced taps was used. The base sampling frequency was 128 MHz with a sample period of 7.8125 nanoseconds (ns) and the ring frequency was 155 MHz. In the graph of FIG. 10, the solid squares represent the measured data for a single tap of the ring and the solid circles represent the enhanced ring output resulting from XORing the three equally spaced taps. According to the model, the fractional predictability of the enhanced output is the fractional predictability of the single tap cubed. The curves in the graph of FIG. 11 fit fractional predictability as a function of the square root of the number of sample periods used to produce the measured data points. By construction, the enhanced curve is the cube of the single tap curve. That leaves a single independent variable, the fractional jitter, $J_F$, which was found to be 0.0197 rms. The curve fit matches the data very well, both with respect to fractional predictability versus sample period and the relationship between the single tap and enhanced output, although this type of measurement can typically be noisy.

The jitter for this 12-LUT ring was also measured directly on an oscilloscope. The ring output was connected to an external test point on the FPGA. The period was 6.55 ns as observed on the oscilloscope for a frequency of 153 MHz. The jitter after 12 cycles from the oscilloscope trigger point was estimated to be 3.5 ns peak-to-peak and the rms value, which is about one-sixth the peak-to-peak value, was 583.3 ps rms. Finally, this value was converted to a single cycle jitter by dividing by the square-root of the number of cycles over which it accumulated, yielding 168.4 ps rms per cycle. The per-LUT jitter was 34.4 ps rms and the fractional jitter was 0.026 rms. This "eyeball" estimation is sufficiently close to confirm the effective jitter obtained by curve fitting the more accurately measured data set of FIG. 10.

Now it was possible to calculate the jitter per LUT due to chaotic sources. First, 0.0197 rms was multiplied by the ring period to find the total jitter of 127 ps rms, and then this was divided by the square root of 24 to find the jitter for a single LUT, $J_{LUT}$ = 25.9 ps rms. This is over 400 times the size of the jitter due to shot noise alone.

The following criteria and steps use the same design and frequency parameters used for the quantum entropy example calculations, except the LUT jitter, $J_{LUT}$, is the measured chaotic jitter:

- Oscillator period at 19.056 LUTs per period is $5.122 \times 10^{-9}$ s, yielding a mean ring oscillator frequency of 195.2 MHz.

- $J_{LUT} = 2.59 \times 10^{-11}$ s rms.

- Ring oscillator fractional jitter, $J_F$ = 0.022 rms.

- Entropy per sampled tap = 0.257.

- $P$ = 0.956647 and $P_{FI}$ = 0.913293.

Weighted average of 2.3477 sample taps per ring enhanced output, times 2 rings (XORed) per sample (Level One sample output), times 15 samples per data stream = 128 MHz internal (Level Two sample output) rate composed of 70.431 mean samples per bit. Raw data samples of Levels One, Two and Three were made available for direct statistical testing.

- $P_{FR} = P_{FI}^{\aleph} = 0.913293^{70.431} = 0.00168164$. $P = (1.68164 \times 10^{-3} + 1)/2 = 0.50084082$. The chaotic entropy at this internal level is already 0.99999796. This is the last level at which direct statistical testing can be applied to confirm the calculations since the number of bits required becomes too large to achieve at subsequent levels.

- The next internal level (Level Three) is the output of one of three redundant generators resulting from XORing 21 Level Two outputs. $P_{FR} = P_{FI}^{\aleph} = P_{FR}\ 0.913293^{1479} = 5.5256 \times 10^{-59}$. $P = (5.5256 \times 10^{-59} + 1)/2 = 0.5 + 2.7628 \times 10^{-59}$. The entropy at this level is, $H = 1 - \varepsilon$ where $\varepsilon = 2.2 \times 10^{-117}$.

- The final output of the generator is the result of XORing the 3 Level-Three generator outputs and finally XORing 4 non-overlapping consecutive bits to produce each final output bit at 32 Mbps. $P_{FR} = P_{FI}^{\aleph} = 0.913293^{17748} = 8.1016 \times 10^{-700}$. $P = (8.1016 \times 10^{-700} + 1)/2 = 0.5 + 4.0508 \times 10^{-700}$. The theoretical entropy at the final output is, $H_C = 1 - \varepsilon$ where $\varepsilon = 4.7 \times 10^{-1399}$.

Effect of Errors in Quantum Noise Estimates

The leakage and shot noise values used in the calculations in this specification are estimates based on the information and assumptions described, but clearly more exact numbers are calculated when further knowledge of the manufacturer's CMOS IC design is available. In addition, the simplest models were used for leakage and shot noise voltage at the CMOS outputs. Errors in any of the estimated parameters result in an increase or decrease in the actual quantum entropy available, but do not change the methods of calculating combined entropy of various types or the general design approach for NDRNGs.

Table 3 summarizes the effect on quantum entropy in the output bits of the exemplary NDRNG described in Example 2 when using a wide range of shot noise voltage from a low of $\sqrt{0.5}$ to a high of $\sqrt{2}$ times the nominal value used in this specification.

Table 3

| Shot noise voltage | Low ($\sqrt{0.5}\times$) | High ($\sqrt{2}\times$) |
|---|---|---|
| 32 Mbps NDRNG | 0.9956 | 0.999974 |

The shot noise voltage is inversely proportional to the square root of the load capacitance. Table 4 shows the effect on quantum entropy of varying $C_L$ over a range of 0.5 to 2 times the value used in the specification.

Table 4

| Load Capacitance | Low (0.5 X) | High (2.0 X) |
|---|---|---|
| 32 Mbps NDRNG | 0.999974 | 0.9956 |

Another estimated variable is slew rate of the LUT output, which is calculated from the assumed rise or fall times. Table 5 shows the effect on quantum entropy of varying slew rate over a range of 0.5 to 2 times the value used in the specification, although it is very unlikely the slew rate could ever be as low as one-half the estimated value.

Table 5

| Slew Rate | Low (0.5 X) | High (2.0 X) |
|---|---|---|
| 32 Mbps NDRNG | 0.99999945 | 0.979 |

Tables 3 - 5 show the estimated or indirectly-measured variables used to calculate quantum entropy in the output of the exemplary NDRNG modeled in Example 2, above. When these variables are changed over a wide range, the design goal for quantum entropy in the exemplary NDRNG is satisfied in all cases except for the high slew rate, where it is low by about two percent. The chaotic entropy maintains the total entropy in the output and ensures effectively perfect statistical properties.

Quantum Noise versus Classical Noise

Shot noise in a broad sense is inherently quantum mechanical because the inability to make exact predictions of instantaneous current is due to the quantization of the moving charge carriers that embody the current. These charge carriers are in a real sense unobservable and their movement unpredictable. Even if each charge carrier could be probed with a photon or other particle, its motion would be altered in a fundamentally unpredictable way due to the uncertainty principle and the instantaneous current would remain non-deterministic.

Formally, shot noise can be either classical or quantum mechanical, or a mixture of both. Qualitatively, the noise begins to be quantum mechanical when wave properties of the charge carriers begin to alter the outcome of their measurement, since wave properties of particles are strictly non-classical, that is, they cannot be described using laws of Newtonian mechanics and classical electromagnetism. Shot noise due to gate direct tunneling leakage and junction tunneling leakage (composed of band-to-band tunneling (BTBT) leakage and trap-assisted tunneling (TAT) currents) are taken to be entirely quantum mechanical for purposes of calculating quantum entropy in this specification.

The magnitude of sub-threshold leakage, which is a diffusion process, and the Poissonian statistics of the resulting shot noise, to a smaller degree, are both affected by quantum mechanical adjustments in MOS transistors of 65 nm and less. Rather than trying to quantify the degree of quantum mechanical versus classical properties of this component of noise, it is simpler to show the entropy due to shot noise calculated both with and without inclusion of sub-threshold leakage.

Table 6 summarizes the results of calculating quantum entropy in the exemplary NDRNG of Example 2 using only shot noise resulting from tunneling leakage currents, as well as results including both tunneling leakage and sub-threshold leakage.

Table 6

| | | 32 Mbps NDRNG | |
|---|---|---|---|
| Generator Rate (MHz) | | 32 | 16 |
| Quantum Entropy, $H_Q$ Tunneling Leakage Only | | 0.964 | 0.998 |
| Entropy Including Sub-Threshold Leakage | | 0.9994 | 0.9999995 |

Entangled Bits -- Qubits

At least partially entangled bits can be created in a NDRNG by sampling ring taps or enhanced outputs at two closely spaced times separated by a time interval, delta $T$ ($\Delta T$). Using parameters from example designs shown in this specification, the standard deviation of the jitter is in the range of 250-300 fs or 105-125 fs if the noise sources include or exclude sub-threshold leakage, respectively.

The graph in FIG. 11 represents the normal probability distribution of the rise or fall time of the output of a ring oscillator caused by quantum mechanical noise sources.

When $\Delta T$ is small compared to one standard deviation of the jitter distribution, two separately measured bits have a high probability of being equal. As $\Delta T$ increases, the probability of equal bits decreases to zero. Finally, as $\Delta T$ increases further, the probability of the two bits being opposite increases to a maximum value. $\Delta T_1$ and $\Delta T_2$ in FIG. 11 are examples in which the two bits are more likely to be equal or unequal, respectively. In a continuously running oscillator and measurement system, the positions of the start and end points of each $\Delta T$ occur at any time in the distribution function, so the actual probabilities of the measured bits being equal or not equal is the average of all possible positions. The range of effective $\Delta T$ is limited. Generally, $0.0 \leq \Delta T \leq 6.0$ SD, where SD is one standard deviation of the jitter distribution function. When $\Delta T$ is more than about 6 standard deviations, the degree of entanglement becomes too small to have any effect. In addition, the relationship of the bits measured at the beginning and end of $\Delta T$ depends on whether the edge being measured is rising or falling, or if both rising and falling edges are allowed. If the measured bits are unequal and rising edges are being measured, the first bit must be a zero and the second is a one. If falling edges are being measured, the first and second bits are reversed.

The probability of entanglement increases as the number of ring outputs used in any measurement increases, which is related to the quantum entropy of the measurement. To achieve quantum entropy near 1.0 requires many ring outputs to be measured. But, a lower entropy of 0.8 or 0.9 requires substantially fewer outputs, while providing nearly the same amount of entanglement. The number of rings used (system resources) must be balanced with the overall performance achieved with lower entanglement.

The specific properties obtained by entangling bits during the process of measurement are controllable by changing the time between measurements and by using measurements of rising or falling edges or both. The number of bits entangled is not limited to two, but may be generalized to as many bits at different $\Delta T$s as desired. $\Delta T$ may be controlled dynamically by using electronically adjustable delay generators or by selecting between a number of samplers with a range of fixed delays.

Sources of entangled bits with controllable properties as described here are useful as building blocks for quantum computers.

In the prior art, non-deterministic random number generators (NDRNGs) required quantum measurements in hardware that were complex and expensive, or were not implementable in common integrated circuitry. Furthermore, there was not an adequate understanding of how to generate random numbers with a precisely specified or known amount of quantum entropy.

Design equations and specific practical designs for simple, inexpensive, yet high quality non-deterministic random number generators are presented in this specification. The designs target CMOS integrated circuits as their functional platform, but the principles may be applied to random number generators of virtually any design or entropy source. NIST (National Institute of Standards and Technology) defines "full entropy" as $H = (1 - \varepsilon)$ bits per bit, where $0 \leq \varepsilon \leq 2^{-64}$, that is, $5.421 \times 10^{-20}$. NDRNGs in accordance with the invention not only meet but vastly surpass that requirement without post processing, conditioning or randomness correction.

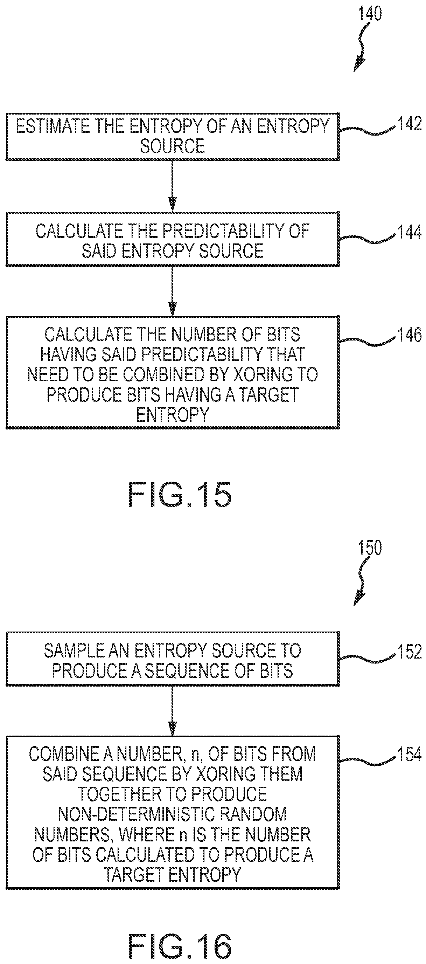

FIG. 15 contains a flow sheet of a method 140 using the techniques described above for designing a NDRNG that generates bits having a target entropy. Steps 142 comprise estimating the entropy of an entropy source. Steps 144 comprise calculating the predictability of said entropy source. Steps 146 include calculating the number, n, of bits having said predictability that need to be combined by XORing them together to produce bits having a target entropy. In a preferred embodiment, $n = $ Log(2 target predictability - 1)/Log(2 single sample predictability - 1) and the target predictability is calculated using the inverse entropy calculation on the target entropy. In another preferred embodiment, samples of like sources are combined, and $n$ = Log(2 target predictability - 1)/Log(2 single sample predictability - 1) and the target predictability is calculated using the inverse entropy calculation on the target entropy. Like entropy sources are sources that produce a similar amount of entropy or have the same or similar structure.

FIG. 16 a flow sheet of a method 140 using the techniques described above for generating non-deterministic random bits having a target entropy. Steps 152 comprise sampling an energy source to produce a sequence of bits. Steps 154 comprise combining a number, n, of bits from said sampled sequence by XORing them together produce non-deterministic random numbers, where n is the number of bits required to produce a target entropy. In preferred embodiments, $n$ = Log(2 target predictability - 1)/Log(2 single bit predictability - 1) and the target and single bit predictabilities are calculated using the inverse entropy calculation on the target entropy and entropy of said entropy source, respectively.

In most circumstances, common methods of gathering or concentrating entropy are not useful to significantly increase quantum entropy. A number of approaches for increasing statistical randomness use some type of compression or extraction algorithm to reduce the predictability of a sequence by removing patterns and redundancies in the data. A sequence can be compressed arbitrarily close to an average per-bit entropy of 1.0, but no further. Therefore, the data compression ratio, that is, the fraction of output bits in a compressed sequence divided by the number of input bits, is an approximate measure of statistical entropy of the input bits. Because no algorithm can distinguish or separately compress the quantum entropy, these algorithms do not change the ratio of quantum entropy to other types of entropy. Assuming perfect compression or a Shannon entropy of 1.0 in the output sequence, both the quantum entropy and the chaotic and/or pseudo-entropy are increased by a factor equal to the reciprocal of the compression ratio. To illustrate: from one of the design examples, a typical single enhanced output sampled at 128 MHz has 0.003147 quantum entropy bits per bit and 0.45646 bits per bit of total entropy. After compression, the total entropy would theoretically be 1.0 bits per bit composed of 0.99531 bits per bit of chaotic entropy and only 0.00689 bits per bit of quantum entropy. Compression- or extraction-type algorithms cannot concentrate the quantum entropy any further.

It should be noted that manufacturers of MOS and CMOS devices and integrated circuits make every effort to reduce leakage and noise any way they can devise. This is required to reduce power consumption and increase reliability of their products, especially as the dimensions of the circuitry are reduced to pack an ever-increasing number of transistors in a given area. For the purpose of non-deterministic random number generation, and especially quantum random number generation, the understanding of the factors affecting leakage can be used to increase rather than decrease the leakage and hence the shot noise in specialized NDRNG circuits. The jitter at the output of a CMOS gate is inversely proportional to the slew rate. Therefore, decreasing the slew rate without increasing load capacitance increases the jitter and hence the entropy. Gate leakage is proportional to the area of the gate and inversely proportional to the thickness of the oxide insulating layer under the gate. Increasing the gate area or especially decreasing the insulation thickness increases the gate leakage current and its related shot noise. Decreasing the channel length or otherwise reducing the size of the threshold voltage of the transistors increases sub-threshold leakage and its shot noise contribution. Other factors, such as doping levels, halo profiles and surface area of the junctions, strongly affect junction leakage. Several of these factors are easily modified in normal CMOS design to increase total shot noise and hence the quantum entropy available for sampling, although some of these parameters are dependent and cannot be separately optimized for maximum noise production.

Mathematical Modeling of Bias Amplification

A bounded random walk is used as a bias amplifier as follows: a random walk with symmetrical bounds at plus and minus $nn$ positions from the center is incremented one step for each "1" in the input sequence and decremented for each "0." If the bound in the positive direction is reached first, a "1" is produced at the output and the walk is reset to the center position. If the negative bound is reached first, a "0" is output and the walk is reset.

Following are the basic relationships quantifying the performance of a random walk when used as a bias amplifier. Equations 1 and 2 are adapted from solutions derived from analysis of biased bounded random walks.

$$N = nn\left(1-\left(\frac{1-p}{p}\right)^{nn}\right)\Bigg/\left((2p-1)\left(1+\left(\frac{1-p}{p}\right)^{nn}\right)\right) \qquad p \neq 0.5 \qquad \text{1a.}$$

$$N = nn^2 \qquad p = 0.5 \qquad \text{1b.}$$

where $N$ is the average number of steps to either boundary as a function of $nn$, the number of positions from the starting position to a boundary, and $p$, the probability of a "1" occurring in the input bits; and

$$Pout = \left(1+\left(\frac{1-p}{p}\right)^{nn}\right)^{-1} \qquad\qquad 2.$$

where $Pout$ is the probability of a "1" occurring in the output bits, i.e., the probability of the walk reaching the positive bound first.

The amplification factor, $Amp$, is defined as the output effect size, $ES$, divided by the input effect size:

$$Amp = \frac{2Pout-1}{2p-1} \qquad\qquad 3.$$

Additional useful relationships may be derived from equations 1 through 3:

$$N = \frac{2Pout-1}{2p-1} Ln\left[\frac{1-Pout}{Pout}\right] \Big/ Ln\left[\frac{1-p}{p}\right] \qquad\qquad 4.$$

giving $N$ as a function of $p$ and $Pout$.

Statistical efficiency may be defined here as the number of bits a perfectly efficient method for achieving the stated statistical result, relative to a specific method or algorithm for producing the same result. Statistical efficiency $SE$, is equal to the amplification factor squared divided by $N$:

$$SE = \frac{2Pout-1}{2p-1} Ln\left[\frac{1-p}{p}\right] \Big/ Ln\left[\frac{1-Pout}{Pout}\right] \qquad\qquad 5.$$

For small input $ES$ ($-0.05<ES<0.05$), equation 5 simplifies to a function of $Pout$ only:

$$SE \cong -2(2Pout-1) \Big/ Ln\left[\frac{1-Pout}{Pout}\right] \qquad\qquad 6.$$

Since the magnitude of the input $ES$ is typically much smaller than 0.05, equation 6 can be used to plot efficiency versus $Pout$, which is effectively equivalent to the output hit rate, $HR$.

In the graph of FIG. 12, the Statistical Efficiency of the random walk bias amplifier is plotted as a function of $Pout$. Note, efficiency is still quite high even when the output probability (effectively the experimental hit rate) is above 85%.

By definition the average number of bits needed to compute a single output with probability $Pout$ in a RWBA with $N_{rw}$ input bits relative to a theoretically "perfect" bias amplifier using $N_0$ bits is

$$N_{rw} = N_0 / SE_{rw} \qquad\qquad 7.$$

From FIG. 12, a statistical efficiency of 0.8 is estimated at a hit rate of 85%. An $SE$ of 0.8 means about 25% more bits are needed to produce a hit rate of 85% relative to a perfect bias amplifier.

The function of a random walk bias amplifier (RWBA) is effectively distributive. That means a RWBA with a bound of $X_1$ positions followed by an RWBA of $X_2$ positions will produce the same result as a RWBA of $X_2$ positions followed by one of $X_1$ positions. The same result will also be produced by a single RWBA of $X_3=X_1\times X_2$ positions. These properties are vital because they allow any number of parallel generators to be combined with no loss of generality or efficiency. The only practical restriction is that all bit streams combined at any level have had equal bias amplification.

A process of majority voting, sometimes called repeated guessing, means producing a single output bit from a binary input sequence based on whether there are more ones (a "majority") or more zeros in the sequence. The number of bits in the input sequence is typically limited to odd numbers to avoid ties. Majority voting (MV) may also be considered a type of bias amplifier, but its results are not strictly distributive. For moderate *Pout,* reversing the order of two MVs with the output of the first feeding bits into the second produces nearly the same final output. At high *Pout,* this compounded MV process begins to underperform the equivalent single MV using $N_{mv3} = N_{mv1} \times N_{mv2}$ input bits.

Majority voting is always substantially less efficient than a random walk bias amplifier, and the efficiency becomes progressively worse as MVs are concatenated, especially at high terminal *Pout.* For comparison purposes the MV approach to bias amplification will be elaborated. The following equation yields the exact probability, *Pout,* of correctly "guessing" the intended target or outcome given an input with probability, $p(p \geq 0.5)$, and a sequence of binary guesses (input bits) of length, *N*:

$$Pout = \sum_{s=a}^{N} p^s (1-p)^{N-s} \binom{N}{s} \qquad\qquad 8.$$

where $a$ = Ceiling[(*N*+1)/2]. Ceiling rounds the argument to the next higher integer. This equation is relatively simple, but it is only useful for fairly small *N* since the computation quickly becomes unwieldy. The range of the equation may be greatly extended by using logarithmic equivalents:

$$Pout = \sum_{s=a}^{N} Exp[sLn[p] + (N-s)Ln[1-p] + Ln[Bin[N,s]]] \qquad\qquad 9.$$

where the term $Ln[Bin[N, s]]$ represents the natural log of the Binomial[*N, s*], which is calculated using a highly accurate approximation (See the Mathematica program below for lnbin.). Equation 9 extends the range of *N* at least up to millions, but this is still far short of the trillions necessary for a direct theoretical comparison to the performance of the RWBA.

The following is a Mathematica program for calculating the natural log of the Binomial[n, k]. lnf[xx] is a routine for calculating the natural log of xx!. This function is further used in the equation, Ln[Bin[n, k]]=Ln[n!]-Ln[k!]-Ln[(n-k)!], to calculate the natural log of the desired binomial function.

```
cof={76.18009172947146,-86.50532032941677,24.01409824083091,
-1.231739572450155,1.208650973866179 10^-3,-5.395239384953 10^-6};

lnf[xx_]:= (x1=xx+1.0; (*calculate Ln[xx!]*)
  If[x1≤1.,0., y=x=x1; tmp=x+5.5-(x+.5)*Log[x+5.5];
    ser=1.000000000190015; Do[(y=y+1.0; ser=ser+cof[[j+1]]/y), {j,0,5}];
    Log[2.5066282746310005*ser/x]-tmp])

lnbin[n_,k_]:= If[k==0.,0.,lnf[n]-lnf[k]-lnf[n-k]] (*calculate Ln[Binomial[n,k]]*)
```

The MV process can be very accurately represented using a normal approximation to a fixed-length random walk assuming *N* is large:

$$Pout \cong F(\sqrt{N}(2p-1)) \qquad\qquad 10.$$

where *F(x)* is the cumulative distribution function (CDF) of the normal distribution at *x*. The relative error in this approximation is less than 1% when *N* is as small as 21, and becomes insignificant at *N* >100,000. This approximation allows the derivation of a simple equation for *N* as a function of *p* and *Pout*:

$$N \cong (F^{-1}(Pout)/(2p-1))^2 \qquad\qquad 11.$$

where $F^{-1}(y)$ is the inverse distribution function (quantile function) of the normal CDF.

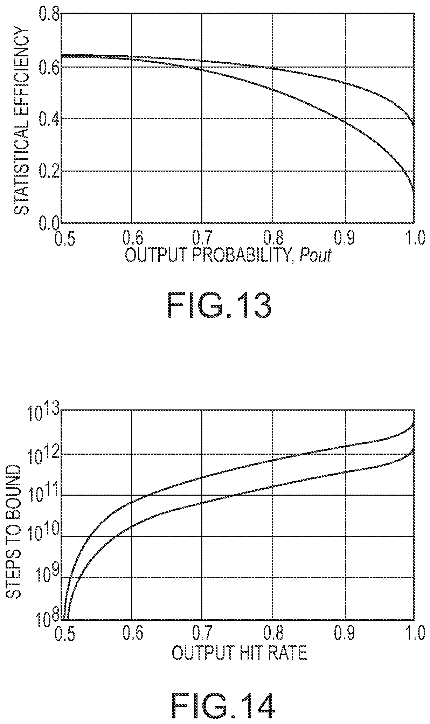

FIG. 13 contains a graph in which the statistical efficiency is plotted as a function of *Pout* (lower curve) for majority voting and the relative efficiency curve (upper) for the random walk bias amplifier. It is immediately apparent that the *SE* for the MV process is significantly less than for the RWBA. The peak $SE_{mv}$ is $2/\pi$, meaning at least 1.57 times the number of bits would be required by MV to accomplish a result equivalent to the RWBA. However, the relative efficiency continuously decreases as *Pout* increases. To achieve a hit rate of 99%, the majority vote process would require about 2.4 times the number of bits as a random walk bias amplifier.

FIG. 14 contains a graph showing the average number of steps a random walker takes to reach the bound to generate the specified hit rate at the bias amplifier output. The number of steps is equivalent to the average number of random bits used in each calculation. The top curve was generated using an input *ES* of 0.75 ppm, and the bottom curve used 1.5 ppm. These are the approximate bounds achieved for experienced operators and peak performance, respectively.

Equation 4 is used to calculate the average number of bits used to produce the specified hit rate given any input probability *p*.

Using the fact that $Ln[(1-p)/p] \cong -2ES$, equation 4 is simplified to the following approximation:

$$N \cong -\left( (2Pout - 1) \times Ln\left[ \frac{1 - Pout}{Pout} \right] \right) / 2ES^2 \qquad \qquad 12.$$

where *Pout* is the output *HR* and *ES* is ($2p$-1). The *output* effect size has been estimated as $ES \approx C \cdot \sqrt{N}$. Solving for *N* and comparing to equation 3, assuming statistical efficiency of 1.0, it is clear the constant, *C,* is the input *ES,* $2p$-1.

For *Pout* close to 1.0, this further simplifies to

$$N \cong \frac{-Ln[1 - Pout]/2}{ES^2} \qquad \qquad 13.$$

For *Pout* equals 0.99, Equation 13 becomes $2.3/ES^2$ (the exact numerator is about 2.25). Equation 13 shows *N* increasing very slowly with increasing *HR* and demonstrates the apparent possibility of reaching an arbitrarily accurate mentally-intended response. Equation 13 also clearly indicates the importance of effect size of the input bits.

These predicted results are based on some critical assumptions about how an operator's conscious intention influences or interacts with non-deterministic random number generators and the associated measurement and feedback system. Probably, the most important assumption concerns how the effect of an influence of mind enters the measurement/feedback system. This subject has been debated by a number of researchers over the years, and there is still no conclusive answer.

Mind-Enabled Device

A mind-enabled device (MED) in accordance with the present invention (sometimes referred to as a device responsive to an influence of mind and a device for responding to an influence of mind) includes a non-deterministic random number generator (NDRNG) in accordance with the invention, also called a true random number generator or a source of non-deterministic random numbers. A NDRNG always includes a physical source of entropy or non-predictability. Examples of entropy sources are thermal noise in resistors (also called Johnson noise), shot noise, which is generally due to the quantized nature of photons or charge carriers such as electrons, quantum phenomena such polarization of photons and timing of nuclear decay. Entropy sources are either chaotic, due to unpredictable complexity, or quantum mechanical, due to fundamental quantum principles. As a practical matter, entropy sources often contain at least a small amount of both types of entropy. An example of a chaotic entropy source is the motion of the balls in a lottery drawing machine. A measurement of this entropy is made when the balls are selected during a drawing. A nearly perfect quantum mechanical entropy source is a polarized photon sent into the input port of a polarization beam splitter with its polarization rotated 45 degrees. The port from which the photon emerges, representing either vertical or horizontal polarization, is quantum mechanically random. Another simple type of photonic quantum entropy source is a photon passed through a beam splitter. The exit port of the splitter the photon emerges from is quantum mechanically random. Usually the two types of entropy are mixed, with one or the other predominating. In a mind-enabled device, an entropy source containing a larger amount of quantum mechanical entropy is preferable because it is more responsive to mental influence than a purely chaotic source. In a preferred embodiment in accordance with the present invention, the non-deterministic RNG is contained in an IC. The source of entropy is a mixture of thermal noise, shot noise including a quantum component from quantum tunneling, chaotic sources from the power supply, and switching noise of other components. These entropy sources manifest as noise in the measurement of transition timing, known as transition jitter or just jitter, in the output of CMOS inverters and gates. In other embodiments, different circuit designs may be used, such as custom ICs with CMOS transistors designed to maximize quantum tunneling, and hence, the quantum component of shot noise, the use of tunneling transistors in place of the traditional CMOS transistors, and the use of qubits (quantum bits with superposed states of one and zero) to provide nearly pure quantum random bits. The non-deterministic RNG preferably has an output that does not require additional post processing or randomness correction to reduce bias or other statistical defects below a threshold of about 1 ppm in a preferred embodiment, but more preferably below 0.1 ppm. A non-deterministic RNG without additional post processing is preferable because it enables mind-enabled devices that use them to be more responsive to mental influence than when additional post processing is used. A mind-enabled device being more responsive or having higher responsivity means a response to mental influence is detectable more quickly or with greater statistical significance or both, or that the contribution from each measurement to a cumulative measurement of mental influence is larger. A non-deterministic RNG with the highest generation rate is preferred because higher generation rates allow mind-enabled devices that are more responsive. In a preferred embodiment, mathematical models allow speed, statistical defects, power consumption and physical resources to be balanced and optimized in a mind-enabled device in an IC. A non-deterministic RNG that generates random bits by measuring quantum entropy sources to provide larger amounts of quantum entropy is preferable because random sequences containing more quantum entropy enable mind-enabled devices that use them to be more responsive to mental influence.

A mind-enabled device may also include one or more converters for converting a property of a sequence of numbers from a non-deterministic RNG into a bias in the resulting one or more converted sequences. Examples of converters are first- and second-order autocorrelation converters, a cross-correlation converter, a runs-of-1 converter and a runs-of-3 converter. The outputs of the original sequence and the converted sequences are then provided to the inputs of bias amplifiers, one bias amplifier for the original sequence and one for each converted sequence. A bias amplifier reduces the number of bits in its output sequence relative to its input sequence while increasing the fractional bias. The bias amplified outputs can be used separately or, in a preferred embodiment, two or more output sequences, including from one or more converted sequences, are combined into a single output. A combined output sequence comprising two or more output sequences is preferable because the effective generation rate is about equal to the sum of the individual sequence rates. Output sequences with higher effective generation rate enable mind-enabled devices that use them to be more responsive to mental influence. Bias amplification provides output sequences with greatly increased biases on a per-bit basis, which is equivalent to increased fractional bias. Bias amplification enables mind-enabled devices that use them to be more responsive to mental influence.

Description of Hardware - Mind-Enabled Device (MED) Systems

The latest round of hardware development includes three levels of random bit generation rates. Each of these uses Field-Programmable Gate Arrays (FPGA) as the platform for high-speed generation and data processing. The Cyclone III FPGA family is produced by Altera Corporation. Altera Cyclone family of FPGAs was found to provide a good balance between speed, size, cost and ease of NDRNG implementation. Tests were also done using Actel and Xilinx FPGAs. The Actel devices were not appropriate for this application and Altera devices were selected over Xilinx due primarily to familiarity with them.

A baseline device uses a Cyclone III, part number EP3C10U256C8N, with 10,320 logic elements (LE) to produce a combined NDRNG generation rate of 6.4 GHz. This generation rate is achieved by running 32 - 200 MHz generators in parallel. Each generator includes two independent ring oscillators with multiple taps that are combined in XOR gates to produce two high-speed enhanced outputs. The enhanced outputs are sent through a series of delay lines with multiple taps and the delayed signals from each enhanced output are combined in unique pairs in XOR gates. The combined outputs are then latched, and finally the latched outputs are combined in XOR gates into a single, raw random bit stream at 200 MHz. The raw bits are then whitened by a linear feedback shift register (LFSR) randomness corrector to produce the usable output. The corrected bits have extremely low statistical defects: less than 10-20 ppb (actual measured levels) of 1/0 bias and first-order autocorrelation. This unusually stringent requirement for statistical quality of the random sequences is necessary because the subsequent processing would amplify any stationary bias or autocorrelation resulting in biased outputs. A fundamental requirement of any mind-enabled device (MED) is to provide unbiased baseline data when not being influenced by mental intention.

The corrected random outputs from each generator are further processed in two paths. One is the usual bias, which is a measure of the fraction of ones to total bits, and the other is autocorrelation, which is derived by converting the first-order autocorrelation into a bias contained in a converted output bit stream that is directly proportional to the autocorrelation. Each of these bit streams is passed separately through a bias amplifier and the resulting amplified streams are combined with other bit streams of the same kind. The combined streams are further amplified until the bias and autocorrelation bit streams are reduced to the desired output bit rate. United States Patent Application Publication No. 2010/0281088, by Wilber, published November 4, 2010, which is hereby incorporated by reference, teaches a random number generator in an IC comprising a plurality of independent ring oscillators, a combiner-sampler, and a clock, each ring oscillator having a plurality of gates, a plurality of sampling taps, and an XOR function.

A second-level device in this series is based on the largest Cyclone III FPGA, the EP3C120F484C8N with 118,088 LE to produce a combined NDRNG generation rate of 204.8 GHz. The increased generation rate is accomplished using the same generator design as in the baseline device with 32 times the number of generators resulting in a NDRNG generation rate of 204.8 GHz. Active cooling of the FPGA is required due to high power density.

A third generation device is also based on the EP3C120F484C8N. In this case, five FPGAs are employed with four of them dedicated to generation and bit stream processing. The fifth FPGA controls and monitors the four generator ICs and combines their outputs into one bias and one autocorrelation stream, and interfaces with the USB I/O chip. The total NDRNG generation rate is 819.2 GHz.

Mind-Enabled Device Baseline Testing

A large number of baseline tests were run on the MED separately and also processed through training software. The MED hardware produced raw random bits at a rate of 891.2 GHz. This extremely high generation rate was accomplished by combining the outputs of 4096 individual generators each operating at 200 MHz. The output of each generator was passed through an LFSR whitening filter (randomness corrector), which reduced bias and first-order autocorrelation defects to less than 10 ppb. At this point, each corrected generator output was used to produce two streams: the first was the unaltered stream representing the bias source, and the second was the bias source passed through a converter, which converted first-order autocorrelation into a bias in the output equal in magnitude to the autocorrelation. The bias and autocorrelation source streams were passed separately through several layers of bias amplification, finally resulting in two output streams at 250 Kbps each. The bias and autocorrelation of the output streams were tested continuously up to hundreds of Gbits. One example was a test to 65.3 Gbits on each output stream. The combined raw source streams were divided by a factor of 3,276,800 in the bias amplification process so the number of raw bits tested was $N = 2.14 \times 10^{17}$ bits. The z-scores for bias and first-order autocorrelation for both the bias and autocorrelation output streams were nominal:

| | Bias Stream - bias 1st order AC | | Autocorrelation Stream - bias 1st order AC | |
|---|---|---|---|---|
| z-score | 1.02 | -1.08 | 0.70 | -1.49 |

The 95% confidence interval for the bias and autocorrelation streams relative to the corrected source streams is:

$$\pm \frac{1.96}{\sqrt{N}} = \pm 4.24 \cdot 10^{-9} \qquad\qquad 14.$$

Additional useful equations:

$$nn = Ln\left[\frac{1-Pout}{Pout}\right] \Big/ Ln\left[\frac{1-p}{p}\right] \qquad\qquad 15.$$

where, *nn*, as in equation 1, is the number of positions in the random walk required to produce *Pout* from the given *p*.

The drift velocity of the random walker is $p^+ - p^-$. That is equal to $p - (1 - p)$ which simplifies to $2p-1$, which is equal to the *ES* of the input bits. Consequently for a large *HR*, the number of steps to the bound converges approximately to:

$$N \cong n \big/ ES \qquad\qquad 16.$$

Based on an empirical estimate of input bit effect size of about 1.5 ppm (p(1)=0.5000075 for "High" intention), a 99 percent correct hit rate should be possible with a one terabit sample size, corresponding to a 5 THz non-deterministic random generation rate and a trial duration of 200ms. Preliminary results are consistent with those expected from the bounds indicated in FIG. 14 for 500 Gbits per 200 millisecond (ms) trial. One derived equation shows the importance of input effect size on the number of bits required in each measurement, being inversely proportional to $ES^2$. Effect size

increases in proportion to the amount of quantum entropy in the raw bits from the NDRNG. In addition removing randomness correction of the NDRNG bits increases the measured effect size. Therefore, the new type of NDRNG design without randomness correction and with known quantum entropy is used to increase effect size.

In addition to the bounded random walk bias amplifier, some embodiments of the present invention include an unbounded random walk bias amplifier with a fixed number of input bits (fixed-length random walk) to produce each output number. This removes or greatly reduces - depending on the variability of the rate of the numbers feeding the fixed-length walk - the large variations in time to complete individual random walk outputs. As with the bounded random walk, the fixed-length random walk starts at zero and increments for each one input and decrements for each zero input. After a constant number of steps, $N_f$, the output is takes as the current count, $nn_f$, and the random walk is reset to zero. The count may further be converted to an approximate z-score by the equation, $z \simeq nn_f / \sqrt{N_f}$ . Although the exact probability of reaching greater than or equal to the end count, $nn_f$ in $N_f$ steps is calculated using the binomial cumulative distribution function, when $N_f$ is above about 1000 (or less if more error is tolerated) the normal distribution is a very good approximation. There are many advantages of using the normal approximation to the binomial distribution in this context. The binomial distribution does not yield a symmetrical result around a midpoint, while the normal distribution does. This is important to keeping the final output of the calculations unbiased. Also, normal numbers can be easily combined by simple algebraic addition and normalization by dividing by the square root of the number of numbers combined.

In some embodiments different statistical properties of the NDRNG output bits are converted to bias and amplified in bias amplifiers creating separate streams of data, which are finally combined to produce an output of a mind-enabled device. For example, the bias or fraction of excess ones in a data stream, is bias amplified to produce one stream. In addition first-order autocorrelation is converted to bias and amplified in another stream. These two outputs may be taken as a two-dimensional output or combined into a single output with increased responsivity to mental intention relative to the bias stream alone. Other properties include but are not limited to, cross-correlation between multiple streams, higher order autocorrelation and runs of one or other lengths in a sequence. Combining the measurement of multiple properties from the same NDRNG output allows more ways a sequence can manifest a statistical alteration in response to mental influence. In some embodiments the NDRNG output is converted to two or more streams representing different properties and these streams are immediately combined to produce a single stream, which is subsequently biased amplified to produce an output.

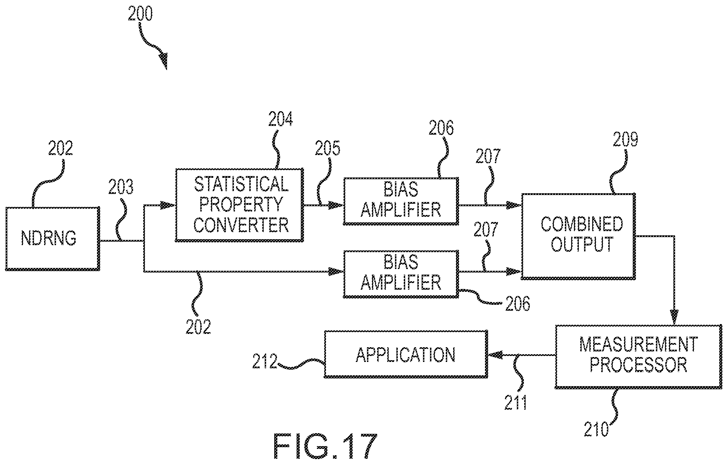

FIG. 17 depicts schematically an exemplary mind-enabled device (ME device) 200 that is responsive to an influence of mind in accordance with the invention. ME device 200 comprises a high-speed non-deterministic random number generator 202 in accordance with the invention. In a preferred embodiment, a NDRNG 202 comprises a plurality of ring oscillators composed of CMOS gates in an integrated circuit, each ring having an odd number of inverting gates. Each oscillator is tapped at multiple points between gates, and the taps are connected to the inputs of an Exclusive-Or gate (XOR) to produce enhanced outputs. The enhanced outputs of independent rings are further combined by connecting them to the inputs of a second level of XOR gates. The output of the second level of XOR gates is latched by a system clock to produce a second-level output. A number of other independent ring oscillators operating at different frequencies are combined in a similar fashion to produce multiple second-level outputs. All the latched second-level outputs are further combined by connecting to the inputs of a third level XOR gate. Finally, the third-level XOR gate output is latched and the latched output of the latch provides a sequence of non-deterministic random numbers at a rate determined by the system clock frequency. NDRNGs are described in detail in US 2010/0281088, .

The level of entropy available from each of the CMOS gates is modeled theoretically or measured, and the statistical defects in the random number sequence is calculated using new mathematical equations of the present invention. In a preferred embodiment, the generation rate is maximized while maintaining the level of statistical defects below a design threshold without using any bias reduction or other randomness correction to reduce statistical defects in the random sequence. In some preferred embodiments, the maximum level of defect is 1 ppm, which typically occurs in the first-order autocorrelation, and the generation rate is 200 MHz. In some embodiments, the maximum level of defect is 0.1 ppm. In order to increase the generation rate, the enhanced outputs from a large number of ring oscillators are permuted and combined to produce a total of 32 of these 200 MHz non-deterministic sequences with an aggregate rate of 6.4 GHz. To further increase generation rate, these entire 6.4 GHz generators are duplicated 16 times in a single IC to produce a 102.4 GHz generation rate, and finally multiple ICs are run in parallel to achieve generation rates of 409.6 GHz in a single system. In preferred embodiments, the random sequence is generated using entropy sources that are dominated by quantum entropy. Therefore, in some embodiments, the entropy source derives from transistors that have specially designed gates to maximize quantum tunneling. In some embodiments, the entropy source is a qubit that produces a random bit with nearly pure quantum entropy when a superposed state is read. In some embodiments, the effective generation rate is increased by XORing the raw sequence of bits simultaneously with a multiplicity of different (statistically independent) pseudorandom sequences.

After the sequence 203 of non-deterministic random numbers is generated, typically random number sequence 203 is passed through one or more statistical property converters 204 for converting one or more statistical properties of the sequence into a bias in the resulting one or more sequences 205. Examples of converters are first- and second-order autocorrelation converters, a cross-correlation converter, a runs-of-1 converter and a runs-of-3 converter. Exemplary ME device 200 comprises one statistical property converter 204. In some embodiments, an ME device comprises one to five statistical property converters. In some embodiments, an ME device does not include a statistical property converter. The outputs of the original random number sequence 203 and the converted sequence(s) 205 are then provided to the inputs of bias amplifiers 206, one bias amplifier for the original stream 203 and a bias amplifier for each converted sequence 205. A bias amplifier 206 reduces the number of bits in its output sequence 207 while increasing the bias. The bias-amplified outputs 207 are used separately or, in a preferred embodiment, two or more output sequences are combined into a single combined output 209. The output 209 is measured in measurement processor 210, typically using techniques described in the next paragraph. Measurements 211 are then available to be used in a particular application 212 of mind-enabled technology, for example, in a mind-enabled question answering system.

The combined output sequences 209 are generated continuously, but in a preferred embodiment, they are used only when a measurement (sometimes called a trial) is initiated by a user. When the measurement is initiated, a block of data from the sequence spanning a fixed time interval is processed for use. The length of the interval is preferably 0.15 to 0.25 seconds. The number of ones and the number of zeroes in the sequence or sequences are counted during a selected interval of 0.2 seconds. In some embodiments, the interval is broken into a number of equal-duration sub-intervals, five sub-intervals in a preferred embodiment. Target bits are produced by a non-deterministic random number generator, one bit for each sub-interval. If the target bit for a corresponding sub-interval is a "one," the counts of ones and zeroes are left unchanged in that sub-interval. If the target bit is a "zero," the counts of ones and counts of zeroes are reversed. Finally, the total counts of ones and of zeroes from all sub-intervals after targets have been applied are added together. The total number of bits n is the sum of ones and zeroes. In a preferred embodiment, a z-score (z) is calculated using the equation, $z = $ (counts of ones - counts of zeroes)/square root [n]. In some embodiments, the target bits are generated prior to any of the numbers used to produce a measurement, and in others the target bits are generated after the numbers used to produce a measurement. These correspond to the "reveal" and the "predict" modes, respectively, which in a preferred embodiment of a QA system are used when measuring bits of information relating to sub-questions about information that already exists at the time the question is asked (reveal mode), and when measuring bits of information relating to sub-questions about information that does not yet exist in the time the question is asked (predict mode).

In some embodiments, multiple NDRNG outputs are generated in parallel and the various types of processing is performed on each of them to produce one or more outputs that can be combined to produce combined outputs. Parallel generation and processing can be used to increase the number of bits used in each output or trial to almost any arbitrary number.

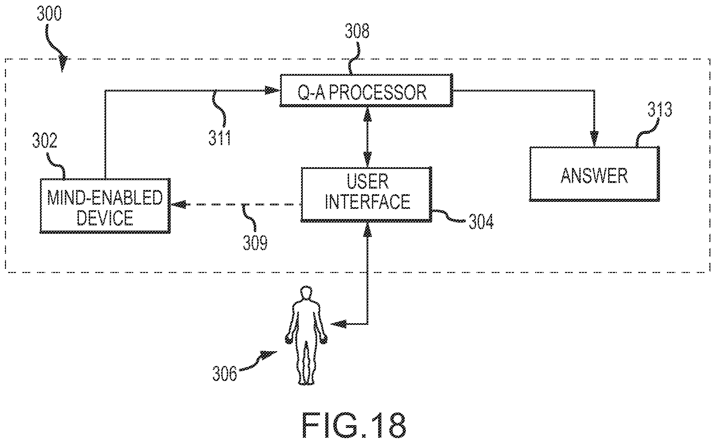

FIG. 18 depicts schematically an exemplary mind-enabled question answering (QA) system 300 in accordance with the invention. Question answering system 300 comprises a mind-enabled (ME) device 302 in accordance with the invention for responding to an influence of mind. QA System 300 further comprises a user interface 304, through which a user 306 is able to interface with system 300. QA system 300 also includes a QA processor 308. Connection 309 serves to communicate initiation of measurements to ME device 309. Feedback from QA processor 308 is presented at user interface 304. In some embodiments, feedback from ME device 302 is presented at user interface 304. In some embodiments, a QA system 300 is implemented using a computer program operating one or more computers Mind-enabled device 302 is operable to measure an influence of mind, as described above with reference to FIG. 17. Information obtained from measurements 311 of ME device 302 are utilized in QA system 300 to provide an answer 313 to questions.

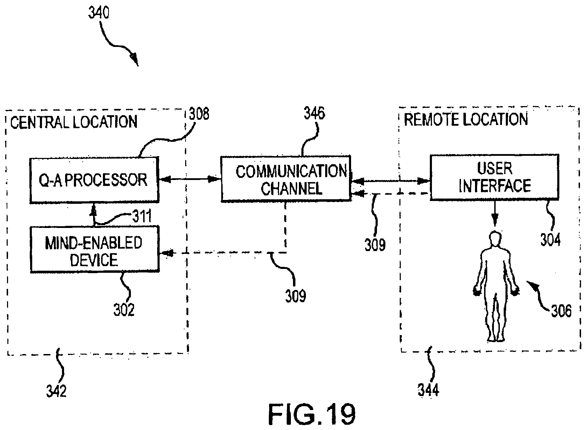

FIG. 19 depicts schematically a QA system 340 in accordance with the invention. QA system 340 comprises mind-enabled device 302 and QA processor 308 located at a central location 342. QA system 340 further comprises user interface 304 at a remote location 344. User interface 304 is connected to QA processor 308 through communication channel 346. Connection 309 passing through communication channel 346 serves to communicate initiation of measurements to ME device 302. Feedback from QA processor 308 is presented at user interface 304. In some embodiments, feedback from ME device 302 is presented at user interface 304. As in QA system 300, measurements of influence of mind performed by mind-enabled device 302 are used to answer questions. As depicted in FIG. 19, even when user 306 is located remotely from mind-enabled device 302, an influence of mind is measured by ME device 302. Thus, QA system 340 is functionally similar to QA system 300, described above, the only real difference being that user interface 304 and user 306 are physically remote from ME device 302 and QA processor 308. "Remote" in this context means the user and the user interface are physically separated from at least the mind-enabled device. The amount of separation can be as little as in the next room to thousands of kilometers. The upper limit of separation is unknown, but time delays in the communication channel could be too large for practical use.

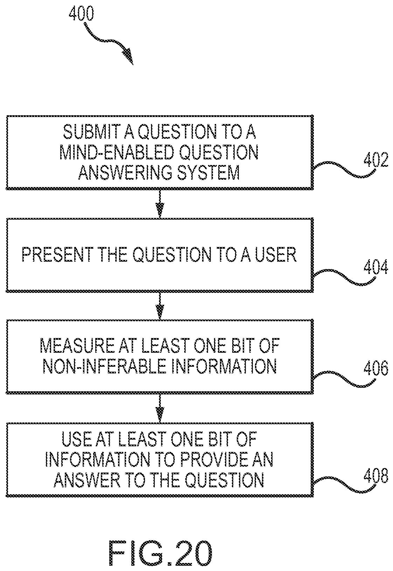

FIG. 20 contains a process flow sheet of a method 400 for using a mind-enabled question answering system (MEQA) in accordance with the invention. Method 400 is described herein with reference to QA system 300 shown in FIG. 18, although it is understood that method 400 may be implemented using other embodiments of mind-enabled QA systems. In steps 402, an initial (or original) question is submitted to a MEQA system (e.g., a system 300) by a user 306 or another person (or machine). An initial question can be asked using one of several possible formats, for example, in natural language, by using a system-constrained vocabulary and sentence construction, or by selecting from a stored list of questions. Questions may be entered by typing, speaking or any other data entry method used to interact with a computer, such as tracking hand or eye movement or monitoring brain waves. In steps 404, QA system 300 presents a question or sub-question using user interface 304 to a user 306. In steps 406, ME device 302 measures an influence of mind to get at least one bit of non-inferable information. In steps 408, QA system 300 uses said at least one bit of non-inferable information to provide an answer 313 to the initial question.

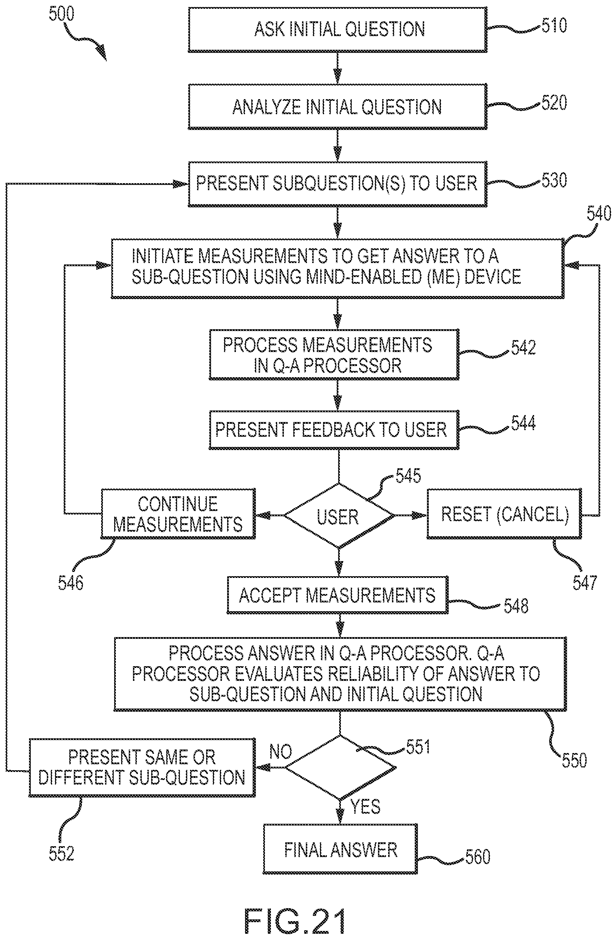

FIG. 21 contains a process flow sheet of an exemplary method 500 for using a mind-enabled question answering system (MEQA) in accordance with the invention. Method 500 is described herein with reference to QA systems 300 and 340, shown in FIG. 18 and 19, respectively, although it is understood that method 500 may be implemented using other embodiments of mind-enabled QA systems. In steps 510, an initial (or original) question is submitted to a MEQA system (e.g. a system 300) by user 306 or other person (or machine). An initial (or original) question is submitted to a MEQA system (e.g., a system 300) by a user 306 or another person (or machine). An initial question can be asked using one of several possible formats, for example, in natural language, by using a system-constrained vocabulary and sentence construction, or by selecting from a stored list of questions. Questions may be entered by typing, speaking or any other data entry method used to interact with a computer, such as tracking hand or eye movement or monitoring brain waves. In steps 520, the initial question is analyzed to determine its structure and intended meaning by using natural language processing (NLP) and other known techniques. If the question is selected from a list, its structure and meaning, and the type of answer desired, will have been predetermined and that information stored for immediate use. In steps 520, each question is further broken down into its simplest component parts. In a trivial case, a question has a single, binary answer. Examples are questions with yes/no answers or any answer having only two possible states - right/left, in/out, up/down, always/never, etc. More complex questions have answers with more than one degree of freedom, meaning the answers have more than two possible states. A simple example of such a question is, 'will the Standard & Poors (S&P) 500 index be up a little or a lot or down a little or a lot in the next 10 minutes?' This question contains two sub-questions that can be answered with two binary answers: up or down, and a little or a lot. For properly answering the question in this example, "a little" and "a lot" must be defined. A simple, exemplary definition is based on statistics. "A little" means changes smaller than or equal to a threshold change value that accounts for 50% of all changes. "A lot" means changes that are larger than that threshold change value. Another way of saying this is a threshold change value is computed so that both large and small changes, above and below the threshold respectively, each occur half the time. Other, more arbitrary definitions may be used, but it is preferred to use definitions that seem natural, because it is easier for the user to visualize the questions and desired type of answers when they are defined in the simplest, most straightforward way.

Each of the answers to the two sub-questions in this example represents one bit of information about the original question. They may be represented in the form of a truth table:

| Up/Down | A Lot/A Little | Answer to Question |
|---|---|---|
| 1 | 1 | Index up a lot |
| 1 | 0 | Index up a little |
| 0 | 1 | Index down a little |
| 0 | 0 | Index down a lot |

It is assumed in this table that each of the bits of information shown in the left two columns, with a "1" indicating true and a "0" indicating false, is 100% correct, and therefore each of the corresponding answers will be 100% correct. In most cases, it is not possible to get information that is absolutely correct. When each bit of information is not known with 100% accuracy, it is useful to represent the information in a more flexible statistical model. A highly useful model is a Bayesian Network (BN). If one has no information about how the index will change, the prior information gives probabilities for the two sub-questions of 50% up, 50% down, 50% a little and 50% a lot. Probabilities may be calculated for each of the possible answers using Bayesian statistics. Given the prior information noted above, each answer has a 25% probability of being correct, which is the result expected by random chance. In some cases, not every question can be represented by sub-questions that relate directly to the initial question, meaning the joint probability of two or more sub-questions may relate indirectly to the original question. In this circumstance, the inputs in a truth table for answering a question result from one or more joint probabilities. Constructing the relevant BN and using Bayesian statistics is a good way to answer these more complex questions. Bayesian analysis is well known and is used, for example, to make clinical or other types of diagnoses given a set of relevant measurements or evidence, among many other applications.

After the sub-question or sub-questions are determined, either automatically in the QA system 300 or from a list associated with a question selected from a list, they are presented in steps 530 to a user 306 through user interface 304. In a preferred embodiment, the interface includes a display screen of a desktop, laptop, tablet or other type of computer or mobile device such as a cell phone, smart phone or similar communication device. In some embodiments, a user interface 304 includes one or more of a game console, a wearable computer, a virtual reality device and a device designed specifically as a user interface for QA system 300. User interface 304 allows interaction between user 103 and QA processor 308. In some embodiments, as in QA system 340 in FIG. 19, user 306 and user interface 304 are remote from other parts of the QA system, including ME device 302 for responding to an influence of mind and QA processor 308. "Remote" means the user and user interface are not in the same room as at least ME device 302, and they may be hundreds to thousands of kilometers apart. In such embodiments, user 306 and user interface 304 connect to the rest of QA system 340, to initiate measurements and receive feedback, by wireless, phone, satellite, cable, optical, Internet or similar communication channel 346.

In some preferred embodiments, sub-questions are presented in steps 530 to user 306 on a display screen as a text version of a single sub-question. If there is more than one sub-question, they are preferably presented only one at a time. In addition to the sub-question, in some embodiments, a graphic appears on the screen.

In steps 540, by clicking on the graphic or pushing a button, user 306 initiates a single measurement by ME device 302 responsive to an influence of mind. The user is instructed to hold in his mind at the time a measurement is initiated, a visualization or a mental intention that the initiated measurement will correspond to and represent the correct answer to the sub-question presented.

In steps 542, measurements 311 from ME device 302 for responding to an influence of mind are processed. In preferred embodiments, measurements 311 from ME device 302 are processed in QA processor 308 to calculate both a direction, meaning one of the two states associated with the two possible answers to the sub-question, and a magnitude, indicating how significant or improbable the measured data was, relative to chance.

In steps 544, in preferred embodiments, once a measurement has been completed, feedback is provided to a user through user interface 304. For example, the z-score contains direction and magnitude information that can be used to control feedback to the user. Mathematically, the z-score can be converted to a probability by using the inverse of the cumulative distribution function (CDF) of the normal distribution, where the probability is typically calculated at -|z-score|. Thereafter, it can be converted to a surprisal factor or similar number and presented in the form of a graphic on a display screen. For example, a circle or sphere may be displayed with its diameter proportional to the surprisal factor of the measured data. Surprisal factor is typically the log (base 2) of the reciprocal of the probability of the measured data occurring by chance. The user is not shown the direction information during measurements so as not to allow any conscious expectation to influence the process. The user is further instructed to repeat the process several times, preferably in a range of one to about 10 measurements. Each time a measurement is made, the results are updated by accumulating the data from every measurement in the series. The surprisal factor is updated and represented by the graphical feedback to the user after each measurement, and the user can choose one of three options, represented in FIG. 21 by user decision block 545 and decision paths 546, 547, 548: select "continue measurements" to initiate another measurement (path 546), select a "reset" to cancel and reset the current series of measurements (path 547), or select "accept" to accept and complete the current series of measurements (path 548). The user may select "reset" if the feedback graphic does not reach a certain size, takes too many measurements to reach a certain size or for any subjective reason. Selecting "accept" produces an output representing one bit of information about the presently asked sub-question that is passed on to QA processor 308. In addition to clicking an icon or area on a screen, a measurement may be initiated in steps 540 by touching or sliding on a touch screen, pressing a key on a keyboard or by using another method of signaling a computer or mobile or other interface device. Feedback concerning surprisal factor may be provided in steps 544 by sound generated by the user interface or any output that produces a sensory cue to the user, such as mechanical or electronic output. In addition to surprisal factor, any transformation of the measured data can be used that provides the user with an indication of the significance or size of each measurement or the cumulative measurement.

In some embodiments, user 306 does not know what the primary or initial question is. Sub-questions are determined at a location containing processor 308 of QA system 300, 340 and sent to user interface(s) 304 of one or more users 306 when they are present and available to answer questions. The sub-questions are presented to the user or plurality of users. Measurements are initiated by the user(s) and feedback is presented to the user(s). All measurements are combined in a processor with the same function as provided by processor 308. In this way, the efforts of many users, or a single user over a period of time, may be combined to produce more reliable answers, without any user having to know the ultimate information being sought. The universal availability of mass communication devices and the Internet allows connections to a very large number of users, and using this approach, to very quickly build up an accurate answer to simple or even complex questions.

In steps 550, a QA processor processes accepted measurements 548 to evaluate the reliability of answer(s) to sub-questions, and ultimately to the initial question, and calculate the probability of an answer being correct. As represented by decision block 551, if QA processor 308 determines that a final answer, that is, the answer to the initial question, has an acceptable probability of correctness, then a final answer 560 is provided. In decision path 552, the QA system asks a new sub-question in steps 530. If an answer has an unacceptable probability of correctness, then via decision path 552, the QA system asks either the same sub-question or a new sub-question in steps 530. Generally, in steps 550, a QA processor determines the best sub-question to ask to most improve the probability of providing a correct answer, and then asks that question via path 552 by steps 530.

After one or a number of iterations of steps 530 - 552 sufficient to achieve a final answer with an acceptable probability of correctness, QA system 300 accepts a final answer 560.

Typically, a final answer 560 and its associated probability are provided in QA system 300 for display and use. Answer 560 may include all possible answers, each with their own associated probabilities and probability distribution functions (PDFs) if they have been calculated. Also, it is clear that exemplary method 500 represents only one of many different variations of process and decision-making choices of MEQA systems in accordance with the invention. Numerous various and different criteria are useful for formulating sub-questions, evaluating measurements, and selecting answers.

Answers to questions produced in accordance with the present invention are not known with exactly 100% certainty, but may approach arbitrarily close to 100% given an adequate number of data points or bits of information measured for each sub-question. Among possible approaches, a QA processor 308 typically uses one of two basic statistical approaches to arrive at an answer: 1) The frequentist approach tests the probability that a set of measured data could have been produced at random given the hypothesis. In the context of a QA system, a hypothesis may be that a particular answer to a question is correct (or incorrect). In frequentist analysis, the hypothesis (a particular answer) is either true or false, having a probability of 1 or 0, and does not change. 2) The Bayesian approach uses the given data or measurements to calculate the probability of an hypothesis (a particular answer or answers to a question) being correct. This approach treats the data as fixed, although updatable with additional data, and hypotheses (particular answer or answers) as being true or false, with some probability between 0 and 1. This approach is called Bayesian because Bayes' Theorem is needed to calculate the probability. Frequentist approaches are simpler to calculate and were previously the more common approach. But, with the advent of commonly available high-speed computers, the more computationally intensive Bayesian approach is being used more extensively. Bayesian approaches are more flexible and can model systems of virtually any complexity. In addition, data can be specified with an estimated probability and PDF, and probabilities and PDFs can be calculated for hypotheses (specific answers to questions). There are several variations, combinations and even some different statistical approaches that are useful by a QA processor 308 to achieve similar results.

In some embodiments according to the present invention, a QA system includes one or more practice operating modes for teaching a user how the system works and providing a way to practice answering questions and sub-questions, or to practice simple tasks such as revealing or predicting single random binary bits. Practice modes also provide a means of assessing a particular user's accuracy and progress at a given task. In a QA practice mode, the data can be simulated, but it must be literally hidden (for reveal mode) or generated after a prediction (for predict mode). Preferably, some practice modes use real-world information for practice purposes. An example would be practicing predicting changes in a stock market index a short time into the future. The user selects practice predict mode for the target index and a *delta t* or time between making the prediction and assessing the results. The entire QA system functions the same way as for non-practice modes, except the *delta t* may be shorter to allow for many practice results in a short time period. A real-time data feed supplies the price information for the index, and an equation is used to calculate the four price regions corresponding to up or down and a little or a lot. The user makes a prediction and receives feedback after *delta t* time has passed and the actual market value is compared to the four possible calculated regions. A simpler type of training tool is designed to reveal or predict single binary bits. The advantage to this type of training is the availability of feedback in near real-time, preferably within less than about 100ms of the initiation of a measurement or trial. Feedback provided within about 50-100ms or less is experienced as immediate or real-time. This allows a user to learn in a way analogous to biofeedback training using real-time feedback. The user is not consciously aware of how the learning occurs, but the desire or motivation to learn, accompanied by practice, increases performance results.

The particular systems, designs, methods and compositions described herein are intended to illustrate the functionality and versatility of the invention, but should not be construed to be limited to those particular embodiments. Systems and methods in accordance with the invention are useful in a wide variety of circumstances and applications. It is evident that those skilled in the art may now make numerous uses and modifications of the specific embodiments described, without departing from the inventive concepts. It is also evident that the steps recited may, in some instances, be performed in a different order; or equivalent structures and processes may be substituted for the structures and processes described. Since certain changes may be made in the above systems and methods without departing from the scope of the invention, it is intended that all subject matter contained in the above description or shown in the accompanying drawings be interpreted as illustrative and not in a limiting sense. Consequently, the invention is to be construed as embracing each and every novel feature and novel combination of features present in or inherently possessed by the systems, methods and compositions described in the specification and by their equivalents.

**Claims**

1.  A question answering system, comprising:

    a question answering (QA) processor (308); and
    a user interface (304) operable to present a question to a user;
    **characterized by** a mind-enabled device (MED) (200, 302); and
    further **characterized in that** said user interface (304) is operable to initiate at least one MED measurement related to an answer to said question, and said QA processor (308) is operable to accept said at least one MED measurement from said MED (200, 302) and to process said at least one MED measurement to produce an answer to said question.

2.  A question answering system as in claim 1 wherein:
    said QA processor (308) is operable to analyze an initial question to formulate at least one sub-question.

3.  A question answering system as in claim 1 wherein:
    said QA processor (308) is operable to analyze at least one MED measurement to get at least one bit of information to produce an answer to a sub-question.

4.  A question answering system as in claim 1 wherein:
    said QA processor (308) is operable to analyze an answer to a sub-question to produce a new sub-question.

5.  A question answering system as in claim 1 wherein:
    said QA processor (308) is operable to analyze at least one MED measurement to provide feedback at said user interface (304).

6.  A question answering system as in claim 1 wherein:
    said QA processor (308) is operable to analyze at least one answer to produce a final answer to an initial question.

7.  A question answering system as in claim 6 wherein:
    said QA processor (308) is operable to analyze at least one MED measurement to estimate a probability of correctness of a final answer.

8.  A question answering system as in claim 1 wherein:
    said QA processor (308) is operable to utilize statistical analysis of at least one MED measurement to formulate a new sub-question.

9.  A question answering system as in claim 1 wherein:
    said QA processor (308) is operable to utilize statistical analysis of at least one MED measurement to calculate the probability of correctness of an answer.

10. A question answering system as in claim 1 wherein:
    said QA processor (308) is operable to utilize statistical analysis of at least one MED measurement to calculate the probability of correctness of each of a plurality of possible final answers.

11. A question answering system as in claim 10 wherein:
    said statistical analysis comprises the use of a Bayesian analysis.

12. A question answering system as in claim 1 wherein:
    said user interface (304) is operable to present a sub-question to a user.

13. A question answering system as in claim 1 wherein:
    said user interface (304) is operable to receive a sub-question from said QA processor (308) and to present said sub-question to a user.

14. A question answering system as in claim 1 wherein:
    said user interface (304) is operable to present MED feedback to a user.

**15.** A question answering system as in claim 1 wherein:
said user interface (304) is located remotely from said MED (200, 302).

**16.** A question answering system as in claim 1 wherein:
said MED (200, 302) comprises a non-deterministic random number generator (NDRNG) (202) capable of generating non-deterministic random numbers at a rate not less than 100 gigabits per second (Gbps).

**17.** A question answering system as in claim 1 wherein:
said MED (200, 302) comprises a non-deterministic random number generator (NDRNG) (202) capable of generating non-deterministic random numbers at a rate not less than one terabit per second (Tbps).

**18.** A question answering system as in claim 1 wherein:
said MED (200, 302) comprises a non-deterministic random number generator (NDRNG) (202) including at least one quantum entropy source, said NDRNG (202) being operable to sample said at least one quantum entropy source such that entropy in output bits of said NDRNG (202) contains not less than 50 percent quantum entropy.

**19.** A question answering system as in claim 18 wherein:
said quantum entropy source comprises a tunneling transistor.

**20.** A question answering system as in claim 18 wherein:
said quantum entropy source comprises qubits.

**21.** A question answering system as in claim 18 wherein:
said quantum entropy source is operable to measure polarized photons.

**22.** A question answering system as in claim 1, further comprising a display for a final answer.

**Patentansprüche**

**1.** Ein Fragebeantwortungssystem, umfassend:

einen Fragebeantwortungs- (QA-)Prozessor (308); und
eine Benutzerschnittstelle (304), die betätigt werden kann, um einem Benutzer eine Frage zu zeigen;
**gekennzeichnet durch** ein gedankenaktiviertes Gerät (MED) (200, 302); und
ferner **dadurch gekennzeichnet, dass** die Benutzerschnittstelle (304) betätigt werden kann, um wenigstens eine MED-Messung in Bezug auf eine Antwort auf die Frage zu initiieren, und der QA-Prozessor (308) betätigt werden kann, um die wenigstens eine MED-Messung von dem MED (200 302) zu akzeptieren und wenigstens eine MED-Messung zu verarbeiten, um eine Antwort auf die Frage zu erzeugen.

**2.** Ein Fragebeantwortungssystem wie im Anspruch 1 wobei:
der QA-Prozessor (308) betätigt werden kann, um eine Anfangsfrage zu analysieren, um wenigstens eine Unterfrage zu formulieren.

**3.** Ein Fragebeantwortungssystem wie im Anspruch 1 wobei:
der QA-Prozessor (308) betätigt werden kann, um wenigstens eine MED-Messung zu analysieren, um wenigstens ein Informationsbit zu erhalten, um eine Antwort auf eine Unterfrage zu erzeugen.

**4.** Ein Fragebeantwortungssystem wie im Anspruch 1 wobei:
der QA-Prozessor (308) eine Antwort auf eine Unterfrage analysieren kann, um eine neue Unterfrage zu erzeugen.

**5.** Ein Fragebeantwortungssystem wie im Anspruch 1 wobei:
der QA-Prozessor (308) betätigt werden kann, um wenigstens eine MED-Messung zu analysieren, um eine Rückmeldung an der Benutzerschnittstelle (304) bereitzustellen.

**6.** Ein Fragebeantwortungssystem wie im Anspruch 1 wobei:
der QA-Prozessor (308) betätigt werden kann, um wenigstens eine Antwort zu analysieren, um eine endgültige Antwort auf eine Anfangsfrage zu erzeugen.

**7.** Ein Fragebeantwortungssystem nach Anspruch 6, wobei:
der QA-Prozessor (308) betätigt werden kann, um wenigstens eine MED-Messung zu analysieren, um eine Wahrscheinlichkeit der Richtigkeit einer endgültigen Antwort zu bewerten.

**8.** Ein Fragebeantwortungssystem wie im Anspruch 1 wobei:
der QA-Prozessor (308) betätigt werden kann, um eine statistische Analyse von wenigstens einer MED-Messung zu verwenden, um eine neue Unterfrage zu formulieren.

**9.** Ein Fragebeantwortungssystem wie im Anspruch 1 wobei:
der QA-Prozessor (308) betätigt werden kann, um eine statistische Analyse von wenigstens einer MED-Messung zu verwenden, um die Wahrscheinlichkeit der Richtigkeit einer Antwort zu berechnen.

**10.** Ein Fragebeantwortungssystem wie im Anspruch 1 wobei:
der QA-Prozessor (308) betätigt werden kann, um eine statistische Analyse von wenigstens einer MED-Messung zu verwenden, um die Wahrscheinlichkeit der Richtigkeit jeder von mehreren möglichen endgültigen Antworten zu berechnen.

**11.** Ein Fragebeantwortungssystem wie im Anspruch 10 wobei:
diese statistische Analyse die Verwendung einer Bayes'schen Analyse umfasst.

**12.** Ein Fragebeantwortungssystem wie im Anspruch 1 wobei:
die Benutzerschnittstelle (304) betätigt werden kann, um einem Benutzer eine Unterfrage zu zeigen.

**13.** Ein Fragebeantwortungssystem wie im Anspruch 1 wobei:
die Benutzerschnittstelle (304) betätigt werden kann, um eine Unterfrage von dem QA-Prozessor (308) zu empfangen und die Unterfrage einem Benutzer zu zeigen.

**14.** Ein Fragebeantwortungssystem wie im Anspruch 1 wobei:
die Benutzerschnittstelle (304) betätigt werden kann, um einem Benutzer eine MED-Rückmeldung zu zeigen.

**15.** Ein Fragebeantwortungssystem nach Anspruch 1, wobei:
die Benutzerschnittstelle (304) entfernt von dem MED (200, 302) angeordnet ist.

**16.** Ein Fragebeantwortungssystem wie im Anspruch 1 wobei:
das MED (200, 302) einen nichtdeterministischen Zufallszahlengenerator (NDRNG) (202) umfasst, der nichtdeterministische Zufallszahlen mit einer Geschwindigkeit von nicht weniger als 100 Gigabit pro Sekunde (Gbps) erzeugen kann.

**17.** Ein Fragebeantwortungssystem wie im Anspruch 1 wobei:
das MED (200, 302) einen nicht deterministischen Zufallszahlengenerator (NDRNG) (202) umfasst, der nichtdeterministische Zufallszahlen mit einer Geschwindigkeit von nicht weniger als einem Terabit pro Sekunde (Tbps) erzeugen kann.

**18.** Ein Fragebeantwortungssystem wie im Anspruch 1 wobei:
das MED (200, 302) einen nichtdeterministischen Zufallszahlengenerator (NDRNG) (202) umfasst, der wenigstens eine Quantenentropiequelle umfasst, wobei das NDRNG (202) betätigt werden kann, um die wenigstens eine Quantenentropiequelle derart abzutasten, dass die Entropie in Ausgangsbits des NDRNG (202) nicht weniger als 50 Prozent Quantenentropie enthält.

**19.** Ein Fragebeantwortungssystem wie im Anspruch 18 wobei:
die Quantenentropiequelle einen Tunneltransistor umfaßt.

**20.** Ein Fragebeantwortungssystem wie im Anspruch 18 wobei:
die Quantenentropiequelle Qubits umfaßt.

**21.** Ein Fragebeantwortungssystem wie im Anspruch 18 wobei:
die Quantenentropiequelle betätigt werden kann, um polarisierte Photonen zu messen.

**22.** Ein Fragebeantwortungssystem wie im Anspruch 1, ferner mit einer Anzeige für eine endgültige Antwort.


**Revendications**

**1.** Système pour répondre à des questions, comprenant :

un processeur (308) destiné à répondre à des questions (QA) ; et
une interface d'utilisateur (304) utilisable pour présenter une question à un utilisateur ;
**caractérisé par** un appareil connecté au cerveau (MED) (200, 302) ; et
**caractérisé en outre en ce que** ladite interface d'utilisateur (304) est utilisable pour initier au moins une mesure MED liée à une réponse à ladite question, et **en ce que** ledit processeur QA (308) est utilisable pour accepter ladite au moins une mesure MED dudit MED (200, 302) et pour traiter ladite au moins une mesure MED pour produire une réponse à ladite question.

**2.** Système pour répondre à des questions selon la revendication 1 dans lequel :
ledit processeur QA (308) et utilisable pour analyser une question initiale afin de formuler au moins une sous-question.

**3.** Système pour répondre à des questions selon la revendication 1 dans lequel :
ledit processeur QA (308) est utilisable pour analyser au moins une mesure MED afin d'obtenir au moins un bit d'information pour produire une réponse à une sous-question.

**4.** Système pour répondre à des questions selon la revendication 1 dans lequel :
ledit processeur QA (308) est utilisable pour analyser une réponse à une sous-question afin de produire une nouvelle sous-question.

**5.** Système pour répondre à des questions selon la revendication 1 dans lequel :
ledit processeur QA (308) est utilisable pour analyser au moins une mesure MED afin de produire une rétroaction à ladite interface d'utilisateur (304).

**6.** Système pour répondre à des questions selon la revendication 1 dans lequel :
ledit processeur QA (308) et utilisable pour analyser au moins une réponse afin de produire une réponse finale à une question initiale.

**7.** Système pour répondre à des questions selon la revendication 6 dans lequel :
ledit processeur QA (308) est utilisable pour analyser au moins une mesure MED afin d'estimer une probabilité d'exactitude d'une réponse finale.

**8.** Système pour répondre à des questions selon la revendication 1 dans lequel :1
ledit processeur QA (308) est utilisable pour utiliser une analyse statistique d'au moins une mesure MED pour formuler une nouvelle sous-question.

**9.** Système pour répondre à des questions selon la revendication 1 dans lequel :
ledit processeur QA (308) est utilisable pour utiliser une analyse statistique d'au moins une mesure MED pour calculer la probabilité d'exactitude d'une réponse.

**10.** Système pour répondre à des questions selon la revendication 1 dans lequel :
ledit processeur QA (308) est utilisable pour utiliser une analyse statistique d'au moins une mesure MED pour calculer la probabilité d'exactitude de chacune d'une pluralité de réponses finales possibles.

**11.** Système pour répondre à des questions selon la revendication 10 dans lequel :
ladite analyse statistique comprend l'utilisation d'une analyse bayésienne.

**12.** Système pour répondre à des questions selon la revendication 1 dans lequel :
ladite interface d'utilisateur (304) est utilisable pour présenter une sous-question à un utilisateur.

**13.** Système pour répondre à des questions selon la revendication 1 dans lequel :
ladite interface d'utilisateur (304) est utilisable pour recevoir une sous-question dudit processeur QA (308) et présenter ladite sous-question à un utilisateur.

**14.** Système pour répondre à des questions selon la revendication 1 dans lequel :
ladite interface d'utilisateur (304) est utilisable pour présenter une rétro-action MED à un utilisateur.

**15.** Système pour répondre à des questions selon la revendication 1 dans lequel :
ladite interface d'utilisateur (304) est située à distance dudit MED (200, 302).

**16.** Système pour répondre à des questions selon la revendication 1 dans lequel :
ledit MED (200, 302) comprend un générateur de nombres aléatoires non-déterministe (NDRNG) (202) capable de générer des nombres aléatoires non-déterministes à un taux d'au moins 100 gigabits par seconde (Gbps).

**17.** Système pour répondre à des questions selon la revendication 1 dans lequel :
ledit MED (200, 302) comprend un générateur de nombres aléatoires non-déterministe (NDRNG) (202) capable de générer des nombres aléatoires non-déterministes à un taux d'au moins 1 térabit par seconde (Tbps).

**18.** Système pour répondre à des questions selon la revendication 1 dans lequel :
ledit MED (200, 302) comprend un générateur de nombres aléatoires non-déterministe (NDRNG) (202) incluant au moins une source d'entropie quantique, ledit NDRNG (202) étant utilisable pour échantillonner ladite au moins une source d'entropie quantique de façon que l'entropie dans les bits en sortie dudit NDRNG (202) ne contienne pas moins de 50 % d'entropie quantique.

**19.** Système pour répondre à des questions selon la revendication 18 dans lequel :
ladite source d'entropie quantique comprend un transistor à effet tunnel.

**20.** Système pour répondre à des questions selon la revendication 18 dans lequel :
ladite source d'entropie quantique comprend des qbits.

**21.** Système pour répondre à des questions selon la revendication 18 dans lequel :
ladite source d'entropie quantique est utilisable pour mesurer des photons polarisés.

**22.** Système pour répondre à des questions selon la revendication 1, comprenant en outre un écran pour une réponse finale.

FIG.1

INPUT VOLTAGE VS. TIME

FIG.2

OUTPUT VOLTAGE VS. TIME

FIG.3

NORMALIZED SUB-THRESHOLD NOISE

FIG.4

NORMALIZED GATE LEAKAGE NOISE

FIG.5

NORMALIZED JUNCTION LEAKAGE NOISE

FIG.6

EP 2 994 826 B1

NORMALIZED TOTAL SHOT NOISE

FIG.7

NORMALIZED TUNNELING SHOT NOISE

FIG.8

EP 2 994 826 B1

FIG.9

FIG.10

FIG.11

FIG.12

FIG.13

FIG.14

EP 2 994 826 B1

140

```
ESTIMATE THE ENTROPY OF AN ENTROPY
SOURCE
```
— 142

↓

```
CALCULATE THE PREDICTABILITY OF
SAID ENTROPY SOURCE
```
— 144

↓

```
CALCULATE THE NUMBER OF BITS
HAVING SAID PREDICTABILITY THAT
NEED TO BE COMBINED BY XORING TO
PRODUCE BITS HAVING A TARGET
ENTROPY
```
— 146

## FIG.15

150

```
SAMPLE AN ENTROPY SOURCE TO
PRODUCE A SEQUENCE OF BITS
```
— 152

↓

```
COMBINE A NUMBER, n, OF BITS FROM
SAID SEQUENCE BY XORING THEM
TOGETHER TO PRODUCE
NON-DETERMINISTIC RANDOM
NUMBERS, WHERE n IS THE NUMBER
OF BITS CALCULATED TO PRODUCE A
TARGET ENTROPY
```
— 154

## FIG.16

FIG. 17

FIG.18

340

EP 2 994 826 B1

CENTRAL LOCATION ⌐308

Q-A PROCESSOR

311

MIND-ENABLED
DEVICE

302

COMMUNICATION
CHANNEL

346

309

309

REMOTE LOCATION

USER
INTERFACE

304

306

342

344

FIG.19

*400*

```
┌─────────────────────────────┐
│     SUBMIT A QUESTION TO A   │
│   MIND-ENABLED QUESTION      │──── 402
│      ANSWERING SYSTEM        │
└─────────────────────────────┘
              │
              ▼
┌─────────────────────────────┐
│  PRESENT THE QUESTION TO A USER │──── 404
└─────────────────────────────┘
              │
              ▼
┌─────────────────────────────┐
│    MEASURE AT LEAST ONE BIT OF  │
│    NON-INFERABLE INFORMATION    │──── 406
└─────────────────────────────┘
              │
              ▼
┌─────────────────────────────┐
│      USE AT LEAST ONE BIT OF    │
│   INFORMATION TO PROVIDE AN     │──── 408
│    ANSWER TO THE QUESTION       │
└─────────────────────────────┘
```

# FIG.20

FIG.21

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009083840 A
- US 7209876 B, Miller and Wantz
- US 7444279 B, Murata
- US 20140072948 A, Boguraev
- US 8423297 B, Wilber
- US 6862605 B, Wilber
- US 20100281088 A, Wilber